# EUROPÄISCHE PATENTSCHRIFT

(11) **EP 0 680 133 B1**
(45) Veröffentlichungstag und Bekanntmachung des Hinweises auf die Patenterteilung: **07.01.1998**
(21) Anmeldenummer: 95106210.8
(22) Anmeldetag: 25.04.1995
(51) Int. Cl.: H02K 29/00, H02K 3/47

(54) **Elektronisch kommutierte Gleichstrommaschine**
Electronically commutated direct current machine
Machine à courant continu commutée électroniquement

(30) Priorität: 26.04.1994 DE 4414527
(43) Veröffentlichungstag der Anmeldung: 02.11.1995
(73) Patentinhaber: ORTO HOLDING A.G., 1219 Luxembourg (LU)
(72) Erfinder: Gründl, Andreas, Dr., D-81377 München (DE); Hoffmann, Bernhard, D-82319 Starnberg (DE); Rasch, Reiner, D-82229 Hechendorf (DE)
(74) Vertreter: Brehm, Hans-Peter, Dr. Dipl.-Chem.

(56) Entgegenhaltungen:
- DE-A- 3 447 980
- DE-A- 4 042 432
- DE-A- 4 130 016
- DE-C- 4 041 805
- US-A- 4 908 347

## Beschreibung

Die Erfindung betrifft eine elektronisch kommutierte Gleichstrommaschine, insbesondere einen elektronisch kommutierten Gleichstrommotor, mit den Komponenten und Merkmalen des Oberbegriffes von Anspruch 1 (DE 41 30 016 A1). Der Gleichstrommotor ist vorzugsweise für höhere Leistungen ausgelegt und kann insbesondere als Antriebsmotor für Kraftfahrzeuge, hier insbesondere Personenkraftwagen, eingesetzt werden.

Nachstehend wird die Erfindung mit Bezugnahme auf einen elektronisch kommutierten Gleichstrommotor beschrieben, ohne daß damit eine Beschränkung der Erfindung beabsichtigt ist.

Eine elektronisch kommutierte Gleichstrommaschine dieser Art ist beispielsweise aus nachstehenden Dokumenten bekannt geworden: DE 34 33 695 C2, EP 0 178 380 B1, DE 40 41 805 C1 und DE 41 30 016 Al. Ein wesentliches Merkmal dieser Bauart einer elektrischen Maschine ist die eisenlose Statoranordnung (Luftspule). Bei einer anderen typischen elektrischen Maschine weist der Stator mehrere elektrisch erregte Pole auf, die typischerweise aus Elektroblech bestehen. Im bestimmt geformten Elektroblechpaket sind Nuten ausgespart, und die zur Erregung erforderlichen Wicklungskomponenten sind in diese Nuten geträufelt. Die Anordnung der Wicklungen innerhalb der Nuten schafft ohne weiteres die notwendige Stabilität der Statoranordnung. Demgegenüber fehlt bei einer eisenlosen Statoranordnung eine entsprechende, aus einem stabilen Elektroblechpaket bestehende Tragkonstruktion für die Wicklungskomponenten.

Entsprechend dem Vorschlag nach dem Dokument DE 34 33 695 C2 weist die Statoranordnung eine mäanderförmige Leiterbahnanordnung auf, die durch eine aus mehreren, gegeneinander isolierten Leitern bestehende selbsttragende Formspule gebildet ist, wobei jeder gerade hin- oder herführende Mäanderabschnitt aus einer Anzahl geometrisch paralleler Leiterabschnitte besteht. Für die Leiter können solche Querschnittsabmessungen vorgesehen werden, daß auch ohne zusätzlichen Träger eine stabile selbsttragende mäanderförmige Leiterbahnanordnung erhalten wird. Nach dem bekannten Vorschlag wird diese mäanderförmige Leiterbahnanordnung durch Formwickeln erzeugt. Die Stabilität einer durch Formwickeln erzeugten Leiterbahnanordnung kann durch nachträgliche Imprägnierung mit flüssigem aushärtendem Kunstharz oder durch Verwendung von sogenanntem Back-Lack-Draht erhöht werden.

Nach dem Vorschlag des Dokumentes EP 0 178 380 B1 kann die eisenlose Statoranordnung ebenfalls eine durch Formwickeln erzeugte Drahtspule sein. Als weitere Alternative wird eine Statoranordnung in Form einer gedruckten Schaltung beschrieben, bei welcher in herkömmlicher Ätz- und/oder Additiv-Technik eine mäanderförmige Leiteranordnung auf einem inerten elektrisch isolierenden Träger erzeugt wird.

Nach dem Vorschlag der Dokumente DE 40 41 805 C1 und DE 41 30 016 A1 ist eine eisenlose, mäanderförmige Statoranordnung vorgesehen, die gerade hin- oder herführende Mäanderabschnitte aufweist, die aus einer Anzahl geometrisch parallel und im Abstand zueinander angeordneter Leiterabschnitte aufgebaut ist, die im wesentlichen rechteckigen Querschnitt aufweisen. Bei diesen Leiterabschnitten handelt es sich um massive Stäbe oder Bleche, die bereits aufgrund ihrer Querschnittsabmessungen die erforderliche Stabilität aufweisen. Diese massiven, im Querschnitt rechteckigen Leiterabschnitte sind im Abstand zueinander angeordnet, und durch die Lücken zwischen zwei benachbarten Leiterstäben wird Kühlluft geführt.

Die Deutsche Offenlegungsschrift 24 55 001 betrifft eine Wicklung für eine elektrische umlaufende Maschine, insbesondere für eine solche Maschine mit Luftspalt-Wicklung. Weil der vom Rotor ausgehende Magnetfluß direkt von den Wicklungen geschnitten wird, werden in der Oberfläche der Leiter der Wicklung große Wirbelströme hervorgerufen. Um derartige Wirbelstromverluste zu verringern, soll die Wicklung aus einer Vielzahl gebündelter Stränge bestehen, wobei jeder Strang seinerseits eine Vielzahl dünner isolierter Stränge aufweist. Wegen ihrer Feinheit sind solche dünnen Drähte schwierig zu handhaben. Um hier Abhilfe zu schaffen, sollen die dünnen Drähte innerhalb eines Stranges verseilt werden. Wegen dieser Verseilung wirkt jeder Strang als verhältnismäßig locker gewickelte Spule, in welcher der sich ändernde Magnetfluß des Rotors einen Strom induziert, der seinerseits im Strang einen Magnetfluß hervorruft. Um auch dieses Problem zu beseitigen, wird mit dieser Druckschrift eine Wicklungsanordnung für eine nutenlose, umlaufende elektrische Maschine mit magnetischem Luftspalt vorgeschlagen, in dem sich eine Vielzahl von an der inneren Umfangsfläche eines Magnetkerns angeordneter Wicklungen befindet. Die Besonderheit besteht darin, daß jede Wicklung mehrere gebündelte Stränge aufweist, wobei jeder Strang aus einer Vielzahl isolierter dünner Drähte besteht, wobei die Stränge benachbarter Wicklungen gegensinnig verseilt sind. Letztlich soll das Problem der mangelnden mechanischen Festigkeit der aus dünnen Drähten bestehenden Statorwicklung in der Weise gelöst werden, daß diese Drähte verseilt werden, und daß die Statorwicklung am Innenumfang des stationären magnetischen Rückschlußmaterials abgestützt wird. In diesem Falle wird eine selbsttragende Tauchspule nicht erhalten. Auch wird der erzielbare Kupferfüllfaktor innerhalb der Statorwicklung nicht angesprochen.

Die Britische Patentschrift 1 465 984 betrifft ebenfalls einen Stator für eine elektrische Maschine, wobei die Statorwicklung als Luftspalt-Wicklung ausgebildet ist, die an einer glatten, nutenfreien Innenwand eines Statorkernes aus magnetischem Rückschlußmaterial abgestützt ist. Um die Wirbelstromverluste gering zu halten, soll die Statorwicklung aus einzelnen Strängen bestehen, die ihrerseits aus einer Vielzahl dünner Drähte aufgebaut sind, die einen Durchmesser von 1 mm oder weniger aufweisen können. Es besteht das Problem, solche dünnen Drähte an der glatten Innenwand des Statorkernes sicher zu befestigen. Weiterhin besteht das Problem, diese Stränge wirksam zu kühlen, insbesondere die Stränge aus inneren Lagen. Zur Abhilfe wird vorgeschlagen, einen vorzugsweise doppelwandigen Käfig aus Kühlrohren vorzusehen, und die Stränge der Statorwicklung innerhalb dieses Käfigs anzuordnen und mit Hilfe von Kunstharz zu sichern. Auch hier ist die Statorwicklung/Kühlkäfig-Anordnung an der Innenwand des Statorkernes abgestützt, so daß eine selbsttragende Tauchspule nicht erhalten wird. Der notwendige Raum für die Kühlrohre vermindert den Kupferfüllfaktor der gesamten Anordnung.

Die Deutsche Gebrauchsmusterschrift 83 21 135 betrifft elektrische Leiter, die beispielsweise in Spulen für Transformatoren, Drosseln und Hochenergie-Magneten einsetzbar sind. Diese Leiter weisen eine Röbel-Charakteristik auf und bestehen insbesondere aus sechs verseilten Einzelelementen ohne zentralen Kern, wobei jedes Einzelelement seinerseits aus einzelnen runden Lackdrähten oder aus Seilen aus runden Lackdrähten bestehen kann. Ein einzelnes Seil kann beispielsweise aus 50 bis 150 runden einzelnen Lackdrähten zusammengesetzt sein. Jeder Lack-Einzeldraht ist mit einer elektrischen Isolierung versehen und kann einen Leiterdurchmesser von 0,2 bis 2,0 mm aufweisen. Vorzugsweise ist der gesamte elektrische Leiter zu einem rechteckigen oder quadratischen Querschnitt verformt. Es läßt sich leicht ausrechnen, daß ein solcher Leiter bei quadratischem Querschnitt, bei einem Einzeldrahtdurchmesser von 0,2 mm und bei einer Sichtdicke der Einzeldrahtisolierung von 25 µm unter optimalen idealisierten Bedingungen maximal einen Kupferfüllfaktor von etwa 50 Vol.-% aufweisen kann. In der Praxis ist der Kupferfüllfaktor solcher Litzen wesentlich kleiner und beträgt typischerweise weniger als 30 Vol.-%. Wird aus solchen Litzen eine Statorwicklung erzeugt, die im eisenlosen, magnetisch wirksamen Luftspalt einer elektrischen Maschine angeordnet werden soll, so stellt sich erneut das mit Bezugnahme auf die vorstehenden Druckschriften abgehandelte Problem, wie aus solch dünnen und leicht biegsamen Drähten eine selbsttragende, mechanisch stabile Statorwicklung, insbesondere für eine lediglich einseitig eingespannte Tauchspule geschaffen werden kann.

Im Rahmen der vorliegenden Erfindung ist nach den Angaben der Dokumente DE 40 41 805 C1 und DE 41 30 016 A1 ein Prototyp eines dort im einzelnen beschriebenen elektronisch kommutierten Gleichstrommotors (15 Permanentmagnet-Polpaare -Polpaare aus Sm/Co-Sintermaterial, Rotordurchmesser ca. 300 mm, mäanderförmige Statoranordnung aus massiven Kupferstäben mit Querschnittsabmessungen von 5 x 2 mm (vgl. DE 41 30 016 A1)) gebaut und geprüft worden. Am Prüfstand zeigte sich, daß bei Umdrehungsgeschwindigkeiten oberhalb etwa 1200 U/min in den massiven Leiterstäben aufgrund der Wechselwirkung mit den rotierenden Dauermagneten in erheblichem und zunehmendem Umfang Wirbelströme induziert wurden. Es traten deutliche Leistungsverluste auf, welche den Einsatzbereich eines elektronisch kommutierten Gleichstrommotors in der Bauart nach DE 40 41 805 C1 oder DE 41 30 016 A1 begrenzten. Die in diesen Dokumenten angegebenen Leistungsdaten von bis zu 100 kW konnten nicht verifiziert werden.

Andererseits erscheint es vielversprechend, nach dem bekannten Bauprinzip eine vergleichsweise einfach aufgebaute Hochleistungsmaschine mit permanentmagnetischer Erregung zu entwickeln, sofern die bei der praktischen Erprobung des bekannten Aufbaues aufgetretenen Beschränkungen hinsichtlich Drehzahl und Leistungsabnahme überwindbar sind.

Davon ausgehend, besteht die Aufgabe der vorliegenden Erfindung darin, eine elektronisch kommutierte Gleichstrommaschine, insbesondere einen elektronisch kommutierten Gleichstrommotor der angegebenen Bauart bereitzustellen, die/der weiterhin mit Luft kühlbar ist und die/der eine hohe Stromdichte zuläßt, sowie hohe Dynamik, gute Überlastbarkeit und ein weitgehend stromlineares Verhalten aufweist; das heißt, daß außergewöhnliche Verluste (wie zum Beispiel Wirbelstrom- oder Sättigungsverluste) in Abhängigkeit von der Drehzahl und/oder vom Drehmoment im wesentlichen nicht auftreten.

Ausgehend von einer elektronisch kommutierten Gleichstrommaschine, insbesondere einem elektronisch kommutierten Gleichstrommotor, mit
- einer Rotationsachse,
- einem Permanentmagnet-Rotor, mit einer geraden Anzahl Permanentmagnetpole,
   -- die in einer konstanten Polteilung angeordnet sind,
   -- die längs eines zylindrischen Luftspaltes rotieren, und
   -- die im Luftspalt ein homogenes Magnetfeld mit geradlinigem, radialem Feldlinienverlauf und ständig wechselnder Polarität erzeugen,
- einer eisenlosen Statoranordnung mit einer selbsttragenden Statorwicklung, die aus Leitermaterial und ausgehärtetem Kunstharz besteht, und die gerade Wicklungsabschnitte aufweist, die parallel zur Rotationsachse ausgerichtet sind, und die sich innerhalb des Luftspaltes erstrecken, wobei in jedem Wicklungsabschnitt pro gegebenem Zeitpunkt nur eine Stromrichtung auftritt, und wobei jeder Wicklungsabschnitt eine Stegbreite aufweist, die mit der Polteilung der Permanentmagnetpole am Rotor korrespondiert,
   ist die erfindungsgemäße Lösung obiger Aufgabe dadurch gekennzeichnet, daß
   das Leitermaterial jedes Wicklungsabschnittes besteht aus einer oder mehreren Litze(n), wobei jede Litze eine Vielzahl dünner Filamente aufweist, die einzeln isoliert sind, innerhalb der Litze verdrillt angeordnet sind und einen Durchmesser kleiner/gleich 0,4 mm aufweisen; und
   dieses Leitermaterial zusammen mit flüssigem Kunstharz verpreßt worden ist, um eine Statorwicklung mit einem Leitermaterialanteil von 70 bis 90 Vol.-% zu erhalten.

Eine solche Statorwicklung ist vorzugsweise als kompakte, dichte Flachwicklung ausgeführt.

Überraschenderweise zeigt sich, daß bei Einhaltung dieser Merkmalskombination für die Statorwicklung eine Gleichstrommaschine, insbesondere ein Gleichstrommotor erhalten wird, die/der sich weitgehend stromlinear verhält. Außergewöhnliche Verluste (z.B. Wirbelstrom- und Sättigungsverluste) in Abhängigkeit von der Drehzahl und/oder des Drehmomentes treten praktisch nicht auf. Dies verdeutlicht wiederum, daß die Uberlastfähigkeit der Maschine/des Motors im wesentlichen lediglich durch thermische Faktoren bestimmt ist. Das dynamische Verhalten ist außerordentlich gut; unter praktisch allen Belastungen werden innerhalb einer Hochlaufzeit von einigen wenigen Sekunden Drehzahlen von 3000 U/min und mehr erreicht. Die erzielbaren Stromdichten sind überraschend hoch. Beispielsweise können Stromdichten von etwa 10 A/mm² dauerfest realisiert werden. Überraschenderweise zeigt sich, daß - trotz dieser hohen Stromdichten - bereits mit einer Luftkühlung Dauerleistungen von etwa 20 kW beherrschbar sind. Bei anderen Hochleistungsmaschinen mit geringem Gewicht (beispielsweise Generatoren für Flugzeuge) sind vergleichbare Stromdichten nur mit einer direkten Flüssigkeitskühlung (Sprühöl-Kühlung) erreicht worden.

Weiterhin zeigt sich, daß eine erfindungsgemäß vorgesehene Statorwicklung die notwendige mechanische Stabilität und Festigkeit aufweist, um eine einseitig eingespannte Tauchspule zu ermöglichen, die freitragend mit nicht unerheblichen Abmessungen in einen magnetisch aktiven Luftspalt hineinragt, der auf beiden Seiten von rotierbar angeordneten Permanentmagneten begrenzt ist. Überraschenderweise kann diese hohe Stabilität trotz der geringen Filamentstärke mit einer außerordentlich geringen Menge an ausgehärtetem Kunstharz (Strukturharz) erzielt werden. Der Kunstharzanteil von etwa 10 bis 30 Vol.-%, vorzugsweise von etwa 10 bis 20 Vol.-% der Statoranordnung hat praktisch keine Auswirkungen auf die Wärmeleitung im Inneren des Spulenträgers und auf den Wärmeübergang an der Oberfläche. Bezogen auf das Gewicht wird ein außerordentlich hoher Füllgrad mit Kupfer erzielt.

Die für die erfindungsgemäß vorgesehene Statorwicklung eingesetzten Litzen sind an und für sich bekannt und handelsüblich zugänglich. Eine beispielhafte Litze kann beispielsweise von der Firma RÖLL ISOLA, CH-4226 Breitenbach, Schweiz, bezogen werden. Eine solche Litze besteht aus einer Vielzahl dünner Einzeldrähte oder Filamente, die einzeln isoliert sind. Diese Filamente weisen einen Durchmesser kleiner/gleich 0,4 mm auf. Bei einem Drahtdurchmesser oberhalb 0,4 mm treten zunehmend drehzahl- und/oder drehmoment-bedingte außerordentliche Verluste (Wirbelstrom-Verluste) auf. Bei einem Drahtdurchmesser kleiner 0,1 mm treten zunehmend Schwierigkeiten bei der Handhabung der Litzen zur Erzeugung von Wicklungsabschnitten mit bestimmter Kontur auf. Gut bewährt haben sich Filamente mit einem Durchmesser von etwa 0,2 bis 0,3 mm; Litzen mit solchen Filamenten werden vorzugsweise eingesetzt.

Die Einzeldrähte bzw. Filamente sind innerhalb der Litze verdrillt angeordnet. Vorzugsweise tritt innerhalb der im Luftspalt befindlichen Länge der Wicklungsabschnitte wenigstens eine Verdrillung der Filamente innerhalb der Litze auf. Damit wird gewährleistet, daß alle Filamente im Mittel den gleichen Induktionseinflüssen unterliegen und damit auch mit gleichen Teilströmen belastet sind. Eine besonders bevorzugte Art der Verdrillung ist die bekannte Roebelstab-Anordnung der Filamente innerhalb der Litze.

Weiterhin weist die erfindungsgemäß vorgesehene Statorwicklung einen Leitermaterialanteil von etwa 70 bis 90 Vol.-% auf. Vorzugsweise soll dieser Leitermaterialanteil wenigstens 80 bis etwa 90 Vol.-% betragen. Ober diesen, die Statorwicklung enthaltenden Abschnitt hinaus kann die Statoranordnung weitere Abschnitte enthalten, wie etwa je eine(n) einstückig angeformte(n) Krone und/oder Fuß aus faserverstärktem Kunstharz, die/der im wesentlichen leitermaterialfrei ist. Die Statorwicklung selbst ist als kompakte, dichte, verpreßte Flachwicklung ausgeführt, ohne irgendwelche Durchbrechungen für einen Durchtritt von Kühlluft. Sofern der Leitermaterialanteil weniger als etwa 70 Vol.-% beträgt, kann die angestrebte hohe Leistung nicht erhalten werden. Weiterhin kann die effektive Wärmeabführung nicht erzielt werden, die Voraussetzung für eine Luftkühlung ist. Sofern der Leitermaterialanteil mehr als 90 Vol.-% beträgt, kann die für eine einseitig eingespannte, in den Luftspalt hineinragende Tauchspule erforderliche mechanische Stabilität und Festigkeit nicht erhalten werden, insbesondere im Hinblick auf den geringen Querschnitt der Filamente. Der vorzugsweise vorgesehene Leitermaterialanteil von etwa 80 bis 90 Vol.-%, bezogen auf das Volumen der Statorwicklung, gewährleistet einen besonders hohen Kupferfüllfaktor. Ein höherer Kupferfüllfaktor wirkt sich in zweifacher Hinsicht positiv aus; zum einen treten bei gleichem Strom geringere Ohm'sche Verluste auf (die Ohm'schen Verluste verhalten sich reziprok zum Füllfaktor); alternativ ist bei gleichen, hinnehmbaren Verlusten ein höherer Strom möglich; zum anderen verbessert ein höherer Füllfaktor (mit dem thermisch gut leitenden Cu) drastisch die Wärmeleitung der Statorwicklung. Zur Erzielung des hohen Leitermaterialanteils wird die Litze vorzugsweise verpreßt und während der Tränkung mit und Aushärtung des Kunstharzes unter mechanischem Druck gehalten. Unter diesen Bedingungen konnte beispielsweise ohne weiteres ein Leitermaterialanteil (Kupfer) von etwa 85 Vol.-% erzielt werden.

Eine aus einer Vielzahl dünner Filamente aufgebaute Litze ist beispielsweise dann gegeben, wenn eine solche Litze pro 1 mm² Querschnittsfläche - in Abhängigkeit vom Filamentdurchmesser - wenigstens etwa 10 bis 50 Filamente aufweist. Bei einem Filamentdurchmesser von etwa 0,2 bis 0,3 mm sind vorzugsweise etwa 20 bis 40 Filamente pro 1 mm² Litzenquerschnittsfläche vorgesehen.

Bei einem erfindungsgemäßen Gleichstrommotor, der mit der vorstehend erläuterten, erfindungsgemäß vorgesehenen Statorwicklung ausgerüstet ist, konnte eine Stromdichte in der Statorwicklung von etwa 10 A/mm² erzielt und allein mit Luftkühlung beherrscht werden. Weiterhin konnten die Auslaufverluste gegenüber einem im wesentlichen gleichartig aufgebauten, jedoch mit Massivdrahtwicklung versehenen Motor nach DE 41 30 016 Al um etwa 80 % verringert werden. Damit kann auf der Basis dieses Motorkonzeptes mit Hilfe der vorliegenden Erfindung ein Gleichstrommotor bereitgestellt werden, der hervorragend für Fahrzeugantriebe geeignet ist. Dieser Motor zeichnet sich insbesondere durch hohe Dynamik, guten Wirkungsgrad auch im Teillastbereich und die Abwesenheit von elektrodynamischen Beschränkungen aus.

Vorteilhafte Ausgestaltungen und Weiterbildungen der Erfindung ergeben sich aus den Unteransprüchen.

So ist die Statorwicklung vorzugsweise als kompakte, dichte, verpreßte Flachwicklung ausgeführt. Diese Flachwicklung hat entweder die Form eines einstückigen, geschlossenen Ringes oder besteht aus mehreren Segmenten, die sich (gegebenenfalls unter Einschluß von Phasenversatzstücken) zu einem geschlossenen Ring ergänzen oder zu einem Ringsegment ergänzen. Die eisenlose Statoranordnung bietet den Vorteil, daß auch eine Teilbestückung eines Motors mit Statorsegmenten möglich ist. Im Gegensatz dazu würden bei einem herkömmlichen Motor mit eisenbehafteten Elektromagneten am Stator bei einer Teilbestückung Probleme auftreten, weil der magnetische Fluß in den Endabschnitten bzw. Kopfstücken nicht geschlossen werden kann. In gleicher Weise ist auch eine Teilbestückung des Rotors bzw. Läufers möglich. Für Sonderanwendungen kann somit für die erfindungsgemäße Gleichstrommaschine, insbesondere Gleichstrommotor, eine Teilbestückung (= teilkreisförmige Ausgestaltung) der Statoranordnung und/oder des Rotors vorgesehen werden. In jedem Falle hat die erfindungsgemäß vorgesehene Statorwicklung solche Abmessungen, daß dieser Ring bzw. dieses Ringsegment zumindest mit den geraden Wicklungsabschnitten axial in den Luftspalt eingeführt werden kann. Nachdem die erforderlichen Werkzeuge zur Aushärtung der mit flüssigem Kunstharz getränkten und in vorgegebener Weise angeordneten Litzen in einer Form unter Druck und Vakuum bereitgestellt sind, weist ein einstückiger, geschlossener Ring eine höhere Festigkeit auf. Für einen aus mehreren Ringsegmenten zusammengesetzten Ring fallen geringere Werkzeugkosten an. Das axiale Einsetzen der fertig zusammengebauten Statoranordnung in den Luftspalt am Rotor vermindert die Fertigungskosten.

Weiterhin ist die Statorwicklung vorzugsweise als einseitig eingespannte Tauchspule ausgebildet, die in einen Luftspalt hineinragt, der auf einer Seite von rotierbar angeordneten Permanentmagneten begrenzt ist, und der auf der anderen Seite von Permanentmagnetmaterial und/oder von magnetischem Rückschlußmaterial begrenzt ist. Eine besonders hohe Luftspaltinduktion und damit eine besonders hohe Leistung wird dann erzielt, wenn die Statorwicklung als Tauchspule in einen Luftspalt hineinragt, der auf beiden Seiten von übereinanderliegenden, gleichsinnig polarisierten Permanentmagnetpolen begrenzt ist. Es wird ein weitgehend homogenes Feld mit geradlinigem, radialem Feldlinienverlauf erhalten. Andererseits sind die Permanentmagnetpole typischerweise als einzelne, stückige Pole ausgebildet, die an je einem Außenring und Innenring aus magnetischem Rückschlußmaterial angeklebt sind. Die Klebeverbindungen am Innenring werden unter der Wirkung der Fliehkraft auf Zug beansprucht. Auch wenn die Permanentmagnete am Innenring zusätzlich mit einer Bandage aus hochfesten Fasern oder Fäden gesichert sind, begrenzen die Klebeverbindungen die Einsatzmöglichkeiten hinsichtlich Drehzahl und/oder Temperatur. Sofern zur Leistungssteigerung hohe Drehzahlen von 4000 U/min und mehr gefordert werden, kann es daher vorteilhaft sein, die Permanentmagnetpole - mit verstärkter Dicke (radialer Abmessung) - lediglich am Außenring vorzusehen und zum Schließen des magnetischen Feldlinienflusses lediglich einen Innenring aus magnetischem Rückschlußmaterial vorzusehen. Für diesen Innenring kann eine synchron mit dem Permanentmagnetrotor rotierbare oder eine feststehende Anordnung vorgesehen werden. Für einen feststehenden inneren Rückschlußring wird vorzugsweise ein Eisenmaterial vorgesehen, in dem nur geringe Wirbelströme induzierbar sind, beispielsweise geblechtes Eisen oder Eisenpulver in einer Kunststoffmatrix. Bei einem feststehenden inneren Rückschlußring müssen zwar Streuverluste des Magnetfeldes hingenommen werden; es werden jedoch Vorteile hinsichtlich der Mechanik erzielt. Auch kann punkt- oder abschnittsweise die Statorwicklung an einem solchen feststehenden inneren Rückschlußring abgestützt werden, solange weiterhin eine für die Luftkühlung erforderliche freie Oberfläche der Statorwicklung verbleibt.

Weiterhin kann vorzugsweise vorgesehen sein, daß der Rotor als offene Glockenkonstruktion ausgebildet ist. An einem Glockenboden, der vorzugsweise aus einem nicht-metallischen Material besteht, ist ein innerer Ring (innere Glocke), und im Abstand dazu ein äußerer Ring (äußere Glocke) angebracht. Der äußere Ring ist an seinem Innenumfang mit Permanentmagnetmaterial belegt. Der innere Ring ist an seinem Außenumfang mit Permanentmagnetmaterial belegt. Sowohl der äußere Ring wie der innere Ring bestehen aus einem magnetisch leitenden Material. Jeweils die Permanentmagnetpole am äußeren Ring und am inneren Ring sind übereinanderliegend angeordnet, wobei übereinanderliegende Pole in radialer Richtung gleichsinnig polarisiert sind und an dem äußeren und inneren Ring benachbarte Pole alternierend polarisiert sind. Zwischen den Polen am äußeren und inneren Ring ist der magnetisch aktive Luftspalt ausgebildet.

Sofern zusätzlich für die Permanentmagnete hochkoerzitives Magnetmaterial vorgesehen ist, wie beispielsweise Sm/Co oder Fe/Nd/B, so kann mit einer solchen Glockenkonstruktion ein sehr homogenes Magnetfeld mit radialem Feldlinienverlauf und eine besonders hohe magnetische Flußdichte erzielt werden. Beispielsweise ist mit etwa 7 mm starken Flachmagneten aus Sm/Co in einem etwa 6 mm starken Luftspalt (radiale Abmessung) eine Luftspaltinduktion von etwa 0,64 T bestimmt worden. Für mechanisch gut beherrschbare Drehzahlen bis zu etwa 3500 U/min (bei einem Luftspaltdurchmesser von etwa 300 mm) wird vorzugsweise diese Rotorkonstruktion vorgesehen, bei welcher der Luftspalt beidseitig von Permanentmagnetmaterial begrenzt ist.

Für die genannten Abmessungen kann der innere Ring und der äußere Ring vorzugsweise eine Länge (axiale Abmessung) von etwa 50 bis 100 mm aufweisen. Bei einer Länge deutlich über 100 mm beginnt die lediglich einseitig eingespannte Glocke zu schwingen, was höhere Toleranzen im Luftspalt erfordert. Ferner nimmt die Geräuschentwicklung erheblich zu. Bei einer Länge kleiner 50 mm wird die Luftspaltfläche unnötigerweise begrenzt, und es kann keine hohe Leistung erzielt werden.

Bei den Permanentmagneten handelt es sich vorzugsweise um einzelne stückige Magnete, die an einem Träger aus magnetisch leitendem Material angeklebt werden; hierfür kommt beispielsweise St 54 in Betracht, eine C-haltige Eisenlegierung mit hoher magnetischer Leitfähigkeit. Die Abmessungen der Permanentmagnete sind abhängig vom Luftspaltdurchmesser und von der Polteilung. Für einen Rotordurchmesser von etwa 250 bis 300 mm können beispielsweise stückige Dauermagnete mit einer Länge von etwa 50 bis 100 mm, einer Breite von etwa 20 bis 40 mm und einer Dicke von etwa 5 bis 10 mm vorgesehen werden. Vorzugsweise wird zwischen zwei benachbarten Magneten an einem Ring eine Lücke bzw. ein Abstand vorgesehen. Die so geschaffene "neutrale Zone" vermindert die Streuverluste. Vorzugsweise entspricht die Breite (Abmessung in Umfasungsrichtung) dieser neutralen Zonen im wesentlichen der radialen Weite des Luftspaltes. Bei minimalen Streuverlusten wird eine besonders hohe Belegung der Rotorumfangsfläche(n) mit Magnetmaterial erzielt.

Sofern die Gleichstrommaschine bei besonders hohen Drehzahlen von beispielsweise 6000 bis 7000 U/min betrieben werden soll, kann zusätzlich vorgesehen werden, solche stückigen Permanentmagnete in einzelne Stäbe oder Segmente zu unterteilen, in denen aufgrund des verminderten Querschnittes die Induzierung von Wirbelströmen herabgesetzt ist. Beispielsweise können in vorgefertigten Magneten mit Hilfe einer Diamantsäge - eingetaucht in eine Flüssigkeit - dünne Nuten ausgefräst werden, die anschließend mit einem Kunstharz ausgegossen werden. Mit solchen segmentierten Dauermagneten kann bei besonders hohen Drehzahlen die Blindleistung noch weiter herabgesetzt werden.

Weiterhin können bei einem glockenförmigen Rotor der vorstehend beschriebenen Art die am inneren Ring angeklebten und im Betrieb auf Zug beanspruchten Magnete zusätzlich mit einer Bandage gesichert werden. Geeignete Fasern oder Fäden sollen aus einem hochfesten Material bestehen, das hitzebeständig und kriechfest ist. Zu geeigneten Materialien gehören Glas, ausgewählte Kunststoffe ("Kevlar", "Aramide") und Polykohlenstoff ("Polycarbon"). Für die Bandage wird eine möglichst geringe Dicke, vorzugsweise kleiner 1,0 mm vorgesehen, um die Luftspaltinduktion nicht unnötig zu schwächen. Eine solche Bandage erlaubt bei gegebener Klebeverbindung höhere Drehzahlen und eine höhere Betriebstemperatur.

Wie bereits gesagt, ist die erfindungsgemäß vorgesehene Statorwicklung als kompakte, dichte Flachwicklung ausgeführt, entweder in der Form eines einstückigen, geschlossenen Ringes, oder in der Form eines oder mehrerer Ringsegmente. Der geschlossene Ring oder die Ringsegmente weisen je eine Außenumfangsfläche und je eine Innenumfangsfläche auf. Vorzugsweise sind in diese Außenumfangsfläche und/oder in diese Innenumfangsfläche axial ausgerichtete Nuten eingeprägt.

Solche Nuten vergrößern die Oberfläche der Flachwicklung und erhöhen den Wärmeübergang aus der Wicklung in das umgebende Medium, was insbesondere für eine Luftkühlung zweckmäßig ist. Solche Nuten schaffen Kanäle bzw. Strömungspfade für eine zwangsweise Kühlluftströmung. Überraschenderweise hat sich gezeigt, daß bei Ausführung der Statorwicklung als Flachwicklung mit den erfindungsgemäß vorgesehenen Parametern (vgl. Anspruch 1) eine Luftkühlung auch dann ausreicht, wenn hohe Leistungen umgesetzt werden. In der Praxis zeigt sich, daß auch ohne Durchbrechungen in der Wicklung eine ausreichende Wärmeabfuhr gewährleistet werden kann. Wegen des gewichtsmäßig geringen Kunststoffgehaltes der Statorwicklung werden deren thermische Eigenschaften einschließlich Wärmeübergang Wicklung/Luft in erster Linie durch das Kupfer der Wicklung bestimmt.

Daher ist für die Gleichstrommaschine vorzugsweise eine Kühlung mit Hilfe zwangsweise geführter Kühlluft vorgesehen, die längs der Außenumfangsfläche und Innenumfangsfläche der Statorwicklung strömt. Diese Kühlluft wird zweckmäßigerweise über Bohrungen in den Luftspalt eingeführt, die in regelmäßigen Abständen im inneren Ring, benachbart zum Glockenboden, ausgespart sind. Vorzugsweise ist eine extern und unabhängig von der Rotordrehzahl erzeugte zwangsweise Kühlluftströmung vorgesehen, da beispielsweise ein Motor dieser Art auch bei niedrigen Drehzahlen bzw. im Stillstand volle Kraft entfalten kann. Eine parallele Führung der Kühlluft längs der Außenumfangsfläche und der Innenumfangsfläche der Statorwicklung senkt den notwendigen Druckabfall. Wegen der relativ großen Querschnitte und der kurzen Durchströmlängen ist die erforderliche Lüfterleistung vergleichsweise gering.

Weiterhin ist vorzugsweise vorgesehen, die den Luftspalt begrenzende(n) Umfangsfläche(n) am Rotor nutenfrei auszubilden. Hierdurch wird die Geräuschentwicklung der Maschine vermindert und die Kühlleistung der Luftkühlung verbessert. Zu diesem Zweck können die als neutrale Zonen notwendigen Abstände bzw. Lücken zwischen benachbarten stückigen Permanentmagneten mit einem Kunstharz ausgefüllt werden.

Wie bereits gesagt, ist die Statorwicklung vorzugsweise als einseitig eingespannte Tauchspule ausgebildet, die in einen Luftspalt hineinragt, der auf beiden Seiten von rotierbar angeordneten Permanentmagnetpolen begrenzt ist. Für eine solche Statorwicklung wird vorzugsweise eine radiale Abmessung (Dicke) von etwa 5 bis 10 mm vorgesehen. Mit einer Dicke in diesem Bereich kann die für eine einseitig eingespannte Tauchspule erforderliche mechanische Stabilität gewährleistet werden. Es läßt sich eine ausreichende Luftspaltinduktion erzielen, die Werte bis zu etwa 0,6 T erreicht. Infolge der dünnen Bauweise des Stators ist eine Luftkühlung ausreichend, mit welcher die Betriebstemperatur im Mittel zwischen etwa 120 und 150° C gehalten wird.

Die Statorwicklung weist gerade Wicklungsabschnitte auf, die vorzugsweise aus mehreren Litzen aufgebaut sind, wobei jede Litze einen rechteckigen Querschnitt aufweist und mit der längeren Seite des Litzenquerschnittes parallel zum Verlauf der Feldlinien im Luftspalt ausgerichtet ist. Mit einem rechteckigen Litzenquerschnitt läßt sich ein höherer Kupferfüllfaktor erzielen. Diese Anordnung erleichtert auch die Ausbildung der Wickelköpfe, weil die kleinere Querschnittsabmessung der Litze leichter an einen relativ kleinen Krümmungsradius angeformt werden kann.

Unter einem "Wicklungsabschnitt" wird im Rahmen dieser Unterlagen eine Anzahl Leiterabschnitte (Filamente und/oder Litzen) verstanden, die untereinander geometrisch parallel angeordnet sind, und alle zusammen parallel zur Rotationsachse ausgerichtet sind. In allen Leiterabschnitten eines Wicklungsabschnittes tritt zu einem gegebenen Zeitpunkt lediglich eine Stromrichtung auf. Ein elektrischer Pol der Statorwicklung kann aus mehreren aneinandergrenzenden Wicklungsabschnitten gebildet sein, sofern in allen Wicklungsabschnitten eines Poles zu einem gegebenen Zeitpunkt die gleiche Stromrichtung auftritt. Unabhängig von einem möglichen Phasenversatz stimmt die Polteilung der elektrischen Pole der Statorwicklung mit der Polteilung der magnetischen Pole am Rotor überein. Die Stegbreite der Wicklungsabschnitte "korrespondiert" insoweit mit der Polteilung der Permanentmagnetpole, als diese Stegbreite im wesentlichen (oder etwas weniger als) 1/1, 1/2, 1/3, 1/4, .... 1/n der Polteilung der Permanentmagnetpole beträgt; in diesem Falle ist ein elektrischer Pol aus 1 oder 2 oder 3 oder 4 oder n aneinandergrenzenden Wicklungsabschnitten gebildet ("n" = eine ganze natürliche Zahl).

Es gibt verschiedene Möglichkeiten zur wicklungsmäßigen Ausbildung der Statorwicklung. Im eingangs genannten Stand der Technik wird stets eine streng mäanderförmige Leiterbahnanordnung für die Statorwicklung angegeben. Eine solche mäanderförmige Leiterbahnanordnung kann auch für die erfindungsgemäße Statorwicklung vorgesehen werden. In diesem Falle werden die geraden Wicklungsabschnitte von den geraden Mäanderabschnitten gebildet. Zu einem gegebenen Zeitpunkt fließt der Strom in einem hinführenden Mäanderabschnitt in einer Richtung und in dem benachbarten herführenden Mäanderabschnitt in der anderen Richtung. Sofern pro Phase lediglich eine Wicklung vorgesehen werden soll, bildet ein Mäanderabschnitt einen elektrischen Pol, und die Stegbreite eines Mäanderabschnittes entspricht der Polteilung der Permanentmagnetpole, weil die erfindungsgemäß vorgesehene Statorwicklung eine dichte, geschlossene Flachspule ist (abgesehen von Phasenversatzstücken).

Vorzugsweise ist eine Statorwicklung vorgesehen, die aus mehreren, in Reihe geschalteten Spulen aufgebaut ist, wobei jede Spule aus einem Stück Litze gewickelt ist und zwei Spulenäste (Spulenstege) aufweist. Die Spulenäste einer Spule sind im Abstand zueinander angeordnet, und in die Lücke zwischen zwei Spulenäste einer Spule ist der Spulenast der nächstfolgenden Spule eingesetzt. Jeder Spulenast (Spulensteg) weist eine Spulenstegbreite auf, die im wesentlichen der halben Polbreite der Permanentmagnetpole entspricht. Die Verschaltung und Bestromung der Spulen erfolgt derartig, daß je zwei benachbarte Spulenstege (aus benachbarten Spulen) in gleicher Richtung vom Strom durchflossen werden. In diesem Falle bildet jeder Spulenast (Spulensteg) einen geraden Wicklungsabschnitt der Statorwickung, und ein elektrischer Pol der Statorwicklung ist aus zwei Wicklungsabschnitten aufgebaut.

Mit dieser, erfindungsgemäß bevorzugten Wicklungsform werden die gleichen vorteilhaften elektromagnetischen Wirkungen erhalten wie mit einer mäanderförmigen Statorwicklung. Jedoch ist der Fertigungsaufwand und die Länge der magnetisch nicht wirksamen Wickelköpfe wesentlich geringer als bei einer mäanderförmigen Statorwicklung.

In diesem Falle ist eine Statorwicklung vorgesehen, deren gerade Wicklungsabschnitte eine Stegbreite (Abmessung in Umfangsrichtung) aufweisen, die im wesentlichen der halben Polbreite der Permanentmagnetpole entspricht, und je zwei paarweise benachbarte Wicklungsabschnitte werden in gleicher Richtung vom Strom durchflossen und bilden einen elektrischen Pol.

Alternativ, und gegebenenfalls aus Gründen der Wickeltechnik, kann auch eine Statorwicklung vorgesehen werden, deren elektrische Pole aus 3 oder 4 oder mehr aneinandergrenzenden Wicklungsabschnitten gebildet wurden; in einem solchen Falle beträgt die Stegbreite dieser Wicklungsabschnitte 1/3 oder 1/4 oder 1/n der Polteilung der Permanentmagnetpole.

Die erfindungsgemäß vorgesehene Statorwicklung besteht- pro elektrischer Phase - aus einer kompakten, dichten, geschlossenen Flachwicklung, deren umfangsmäßige Länge einem bestimmten Ringsegment (180° oder 120° oder 90°) entspricht. In diesem Falle läßt sich nicht vermeiden, daß während der Dauer eines Stromdurchganges in einer Richtung nicht sämtliche Leiter bzw. Filamente eines elektrischen Poles zur Erzeugung einer elektromagnetichen Kraftwirkung beitragen. Zum Ausgleich kann vorzugsweise vorgesehen werden, daß bei motorischem Einsatz eine Speisung mit sinusförmigem Strom erfolgt, dessen Kurvenform an die Spannung angepaßt ist, die von den rotierenden Permanentmagneten in der Statorwicklung induziert wird. Diese induzierte Spannung ist u.a. abhängig von der relativen Magnetbelegung am Rotorumfang (neutrale Zonen) und von der Anordnung und Anpassung der Wicklungsabschnitte der Statorwicklung an diese Magnetanordnung bzw. -belegung. Durch Speisung mit einem angepaßten sinusförmigen Strom läßt sich eine optimale Ausnutzung, insbesondere auch hinsichtlich des Wirkungsgrades erzielen. In jedem Falle wird erfindungsgemäß eine wesentlich höhere Leistung erzielt als mit der bekannten Massivdrahtwicklung, deren addierte Kupfer-Stegbreite pro elektrischem Pol weniger als 1/2 der Polbreite der Permanentmagnetpole betragen hat (vgl. DE 41 30 016 A1).

Die geraden Wicklungsabschnitte ragen mit einer bestimmten Länge in den Luftspalt hinein. Diese Länge ist von der Länge (axiale Abmessung) des Luftspaltes abhängig und beträgt im vorliegenden Falle (beispielsweise bei einem Luftspaltdurchmesser von etwa 300 mm) etwa 50 bis 100 mm.

In an und für sich bekannter Weise sind aufeinanderfolgende gerade Wicklungsabschnitte über einen oberen Wickelkopf und/oder einen unteren Wickelkopf miteinander verbunden. Vorzugsweise ist vorgesehen, daß sich zumindest die oberen Wickelköpfe in Richtung und Dicke innerhalb einer gedachten Verlängerung der geraden Wicklungsabschnitte erstrecken, so daß die fertig zusammengebaute Statoranordnung axial in einen zylindrischen Luftspalt an einem gegebenen Rotor eingesetzt werden kann. Dieses axiale Einsetzen kann vergleichsweise einfach erfolgen, weil die Statoranordnung eisenlos ausgeführt ist. Der Aufwand zum Zusammenbau der Gleichstrommaschine wird vermindert.

Vorzugsweise sind die oberen Wickelköpfe in eine einstückig angeformte Krone eingebettet, die aus faserverstärktem Kunstharz besteht. Vorzugsweise ist glasfaserverstärktes Kunstharz vorgesehen, wobei das Kunstharz das gleiche Strukturharz sein kann, mit welchem die Statorwicklung gefüllt und versteift ist. Eine solche Krone erhöht die mechanische Stabilität der Statoranordnung. Bei Bedarf kann in eine solche Krone zusätzlich eine Bandage aus hochfesten Fasern oder Fäden eingelegt sein. Eine solche Bandage verhindert eine Verformung (trichterförmige Aufweitung) des Statorringes bei Erwärmung aufgrund der unterschiedlichen Wärmeausdehnungskoeffizienten von Kupfer und Kunststoff.

Weiterhin können die unteren Wickelköpfe in einen einstückig angeformten Fuß aus faserverstärktem Kunstharz eingebettet sein. Mit Hilfe dieses Fußes ist die Statoranordnung an einer Trägerplatte befestigt und zentriert. Im Fuß können in regelmäßigen Abständen axial und/oder radial ausgerichtete Bohrungen ausgespart sein. Durch diese Bohrungen sind Stifte oder Bolzen geführt. Uber die radial ausgerichteten Stifte erfolgt eine Befestigung an einem Bund der Trägerplatte. Uber die axial ausgerichteten Stifte erfolgt eine azimutale Ausrichtung der geraden Wicklungsabschnitte und der oberen Wickelköpfe. Zusätzlich kann der Fuß mit Hilfe eines Spannrings gesichert werden. Mit Hilfe dieser Befestigungsmittel wird eine sichere und stabile Anordnung einer einseitig eingespannten Tauchspule erhalten.

Nach einer weiteren vorteilhaften Ausgestaltung ist vorgesehen, daß eine Anzahl benachbarter gerader Wicklungsabschnitte zu einem Wicklungssegment zusammengefaßt ist, das eine konstante Polteilung aufweist, und das elektrisch eine Phase bildet. Es ist wenigstens ein weiteres Wicklungssegment dieser Art vorhanden, und diese Wicklungssegmente sind am gleichen Umfang elektrisch phasenversetzt angeordnet. Es wird ein Gleichstrommotor erhalten, der aus jeder Rotorstellung heraus selbsttätig anläuft. Weiterhin werden die Gleichlaufeigenschaften noch weiter verbessert. Vorzugsweise ist die gesamte Statoranordnung aus drei im wesentlichen 120° umfassenden Wicklungssegmenten aufgebaut, und zwei Wicklungssegmente sind am Umfang derartig angeordnet, daß sie gegen das dritte Wicklungssegment um +/- 2/3 der Polteilung der Permanentmagnetpole gegen diese Polteilung versetzt angeordnet sind. Am gesamten Motor wird eine dreiphasige Kraftwirkung mit allen ihren Vorteilen erhalten. Alternativ kann für die ringförmige Statoranordnung auch ein Aufbau aus vier oder mehr elektrisch gegenseitig getrennten Phasen vorgesehen werden. Die Auftrennung in einzelne Phasen wird bei dieser Bauart erleichtert, weil eine Spulenkopplung auf benachbarte Kopfstücke beschränkt und dort minimal ist.

Die Herstellung einer erfindungsgemäß vorgesehenen Statoranordnung kann im wesentlichen in einer an und für sich bekannten Weise erfolgen. Benötigt wird eine teilbare, heiz- und evakuierbare Form, deren Innenraum an die Kontur der Statoranordnung angepaßt ist. Für Laborzwecke wird man die Statoranordnung aus einzelnen Segmenten zusammensetzen, und in diesem Falle ist lediglich eine Form erforderlich, mit welcher ein einzelnes Segment gefertigt werden kann. Für industrielle Zwecke wird man die gesamte Statoranordnung als einstückigen, geschlossenen Ring oder als einstückiges Ringsegment fertigen, und es muß eine entsprechende Form bereitgestellt werden. Es wird eine Litze bereitsgestellt, die aus einer Vielzahl einzeln isolierter Filamente besteht. Aus dieser Litze wird in einer Wickelvorrichtung eine gewünschte Vorwicklung erzeugt. Diese Vorwicklung wird mit Glasseidefäden oder dergleichen provisorisch fixiert. Die endgültige Statorwicklung kann aus einer oder mehreren Vorwicklung(en) aufgebaut werden. Die Vorwicklung(en) wird/werden in die Form eingelegt und dort mit Hilfe von Paßstiften fixiert. Die für die Krone und den Fuß vorgesehenen Bereiche werden mit Glasfasern ausgefüllt. Bei Bedarf wird im Bereich der Krone eine vorgefertigte Bandage aus hochfesten Fasern/Fäden eingelegt. Die Form wird geschlossen und abgedichtet, und es wird mäßiger mechanischer Druck auf die eingelegte(n) Vorwicklung(en) ausgeübt. Die Form wird erwärmt (Trocknung, Temperierung). Parallel wird das vorgesehene Strukturharz (das ein hohes Kriechvermögen aufweisen soll) luftfrei angemischt und erwärmt. Die temperierte Form wird evakuiert. Das Vakuum wird mit erwärmtem flüssigem luftfreiem Harz gebrochen. Unter erhöhtem Druck wird Harz nachgedrückt. Man läßt die Form mit Inhalt bei Normaldruck im Ofen aushärten. Anschließend erfolgt eine langsame Abkühlung. Die Form wird geöffnet, und die Statoranordnung (das Statoranordnungssegment) wird entnommen und gereinigt.

Die Anschlüsse werden abgelöst, freigeätzt, in Form gebracht und zum Verlöten vorbereitet.

Für eine elektronisch kommutierte Gleichstrommaschine dieser Art ist eine exakt arbeitende Pollageerfassung notwendig, da die Ströme in der Statorwicklung synchron mit der momentanen Magnetposition des Rotors gesteuert werden müssen. Bei einer beispielhaften Maschine, die mit 15 Polpaaren am Rotor ausgerüstet ist, muß der Strom in den Statorwicklungen während einer Rotorumdrehung entsprechend 15 mal die Richtung wechseln. Bei Drehzahlen von etwa 3000 bis 6000 U/min ist somit für den Strom eine Frequenz von 750 bis 1500 Hz erforderlich. Diese für Elektromotoren schon recht hohe Frequenz ist ein wesentlicher Grund für die sehr hohe Leistungsausbeute dieses Motorkonzeptes. Der Einsatz hoher Frequenzen ist beim vorliegenden Motorkonzept auch deswegen vorteilhaft, da im Gegensatz zu herkömmlichen Motorkonzepten kein Eisenkreis vorhanden ist, der mit dieser Frequenz ummagnetisiert werden müßte und entsprechend hohe Verluste verursachen würde. Zur Steuerung der hohen Grundfrequenz von etwa 750 bis 1500 Hz soll die Grenzfrequenz der Pollageerfassung wenigstens bei etwa 100 kHz liegen. Für diesen Einsatzbereich erfolgt die Pollageerfassung vorzugsweise mit einem Resolver. Vom Prinzip her ist eine Resolver ein Transformator, bei dem die Koppelung zwischen Primär- und Sekundärwicklung durch mechanisches Verdrehen stufenlos zwischen den Werten +1/-1 variiert werden kann. Dieser Transformator wird beispielsweise mit ca. 20 kHz gespeist, und über den Vergleich mit der induzierten Spannung kann die Stellung des Resolvers sehr genau und schnell ermittelt werden. Im vorliegenden Falle rotiert die Primärwicklung synchron mit dem Permanentmagnet-Rotor, und in geringem Abstand dazu ist die Sekundärwicklung an einer Trägerplatte angebracht, an welcher auch die Statoranordnung befestigt ist. Der Einsatz des Resolvers hat auch den Vorteil, daß keine aktiven elektronischen Bauteile benötigt werden. Es ist zweckmäßig, auf eine platzsparende Ausgestaltung des Resolvers zu achten, so daß der weitgehend leere Innenraum der Maschine für andere Zwecke zur Verfügung steht, beispielsweise für den Einbau eines Untersetzungsgetriebes, wenn die Maschine als Gleichstrommotor zum Antrieb eines Rades eines Personenkraftwagens eingesetzt wird.

Wird die Maschine motorisch, also als elektronisch kommutierter Gleichstrommotor eingesetzt, so erfolgt die Stromversorgung mit Hilfe eines Wechselrichters. Vorzugsweise ist ein Wechselrichter vorgesehen, der für eine Pulsweitenmodulation ausgelegt ist. Je nach Verfügbarkeit geeigneter Komponenten kann der Motor wahlweise im Stern an einen Drehstromwechselrichter angeschlossen werden oder auch an drei einphasige Wechselrichter, die gegeneinander einen Phasenversatz von 120° haben (bei einer entsprechenden drei-phasigen Statorwicklung). Im Falle eines Motors mit 15 Polpaaren am Rotor und einer Nenndrehzahl von 3000 U/min muß die Speisung wenigstens mit einer Frequenz von 750 Hz erfolgen; bei höheren Drehzahlen sind entsprechend höhere Frequenzen bis zu etwa 1500 bis 2000 Hz erforderlich.

Vorzugsweise ist vorgesehen, bei motorischer Anwendung jede einzelne Phase der Statorwicklung mit wenigstens einem oder mehreren zugeordnetem/n Wechselrichter(n) zu speisen. In diesem Falle können zur Speisung kleinere und damit preiswertere Wechselrichter vorgesehen werden. Weiterhin wird die Redundanz verbessert, weil bei Ausfall eines Wechselrichters die weiteren Wechselrichter und damit der Motor einsatzbereit bleiben.

Typische Werte für die Spannungslage eines Gleichspannungsanschlusses liegen bei etwa 200 bis 400 VDC; wobei jedoch auch höhere Werte bis zu etwa 600 bis 800 V vorstellbar erscheinen. Die Wechselrichter sollen in der Lage sein, sinusförmige Ströme zu liefern, um Verluste und Geräusche zu optimieren. Weiterhin sollen die Wechselrichter zwingend in der Lage sein, hochfrequent zu takten (≥ 20 kHz), um den Strom einregeln zu können, da der Motor konzeptbedingt extrem niederinduktiv ist. Weiterhin soll die Wechselrichtersteuerung in der Lage sein, entsprechend einem gegebenen Pollagesignal (das die exakte Stellung des Rotors repräsentiert und vorzugsweise von einem Resolver erzeugt wird) einen sinusförmigen Strom, geregelt nach Amplitude und Phasenlage, in die Statorwicklung(en) einzuprägen. Außerdem ist es wünschenswert, wenn die Wechselrichtersteuerung in der Lage ist, bei hohen Drehzahlen das Steuerverfahren so zu ändern, daß die Phasenlage von Strom und Spannung gegeneinander verschoben werden kann; es wird so ein "Feldschwächebereich geschaffen. Wirkt auf den Motor ein Bremsmoment ein, so muß der Wechselrichter in Rückspeisebetrieb gehen, und die rückgespeiste Energie vorzugsweise in eine Batterie einspeisen. Wie bei allen permanent erregten Antrieben muß der Wechselrichter ausgangsseitig gegenüber Spannungen geschützt werden, die der Motor im "Feldschwächebereich" bzw. bei Überdrehzahlen abgeben kann.

Nachstehend wird die Erfindung mehr im einzelnen anhand einer bevorzugten Ausführungsform mit Bezugnahme auf die Zeichnungen erläutert; die letzteren zeigen:
- Fig. 1: anhand einer schematischen Querschnittsdarstellung - parallel zur Rotationsachse - einen erfindungsgemäßen Gleichstrommotor;
- Fig. 2: in einer perspektivischen Darstellung einen Ausschnitt einer erfindungsgemäß vorgesehenen Statoranordnung;
- Fig. 3: ein Wickelschema zur Erzeugung der Vorwicklung für eine Statorwicklung;
- Fig. 4: in einer Querschnittsdarstellung längs der Schnittlinie 2-2 aus Fig. 1 - schematisch und ausschnittsweise - den magnetisch aktiven Luftspalt mit einer Zuordnung der Permanentmagnetpole am Rotor zu den Wicklungsabschnitten der Statorwicklung;
- Fig. 5: anhand einer graphischen Darstellung für einen beispielhaften Motor nach Fig. 1 und 4, ein Drehzahl-Leistungsdiagramm;
- Fig. 6: anhand einer graphischen Darstellung für einen beispielhaften Motor nach Fig. 1 und 4 die Hochlaufzeit des freidrehenden Motors bei verschiedenen Stromspeisungen;
- Fig. 7a und 7b: anhand einer graphischen Darstellung für einen beispielhaften Motor nach Fig. 1 und 4 das spezifische Drehmoment, einmal in Abhängigkeit vom Drehmoment (Fig. 7a) und dann in Abhängigkeit von der Drehzahl (Fig. 7b);
- Fig. 8: anhand einer graphischen Darstellung für einen beispielhaften Motor nach Fig. 1 und 4 das thermische Verhalten bei Kühlung mit Luft; und
- Fig. 9a und 9b: in Form eines Höhenliniendiagrammes für einen beispielhaften Motor nach Fig. 1 und 4 den totalen Wirkungsgrad (Fig. 9a) und den Wirkungsgrad ohne Auslaufverluste (Fig.9b).

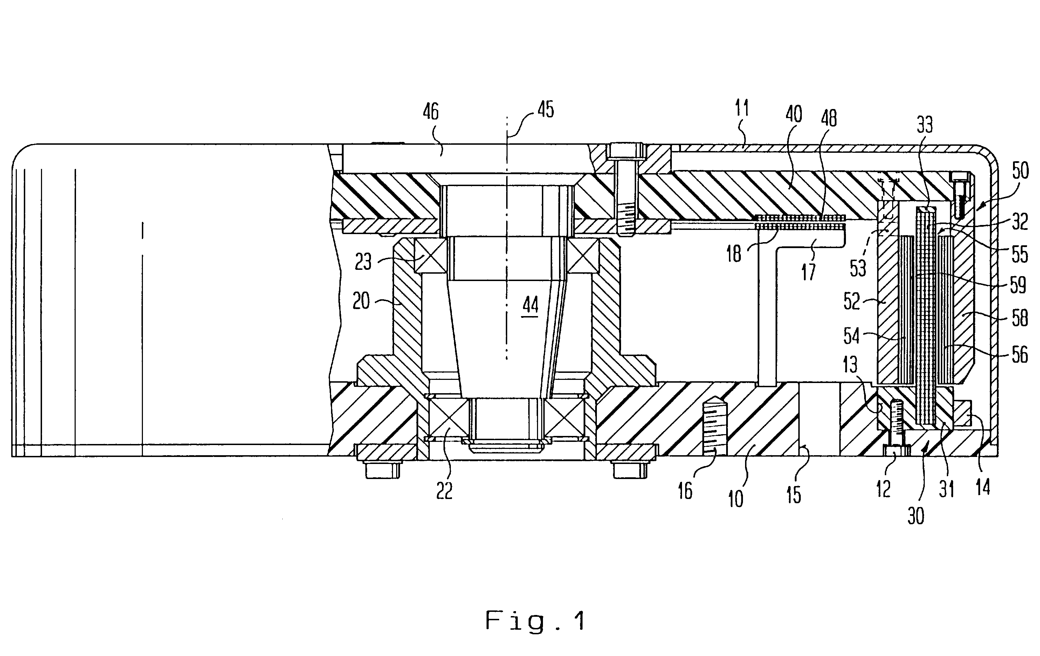

Die Fig. 1 zeigt - schematisch und im Schnitt - einen erfindungsgemäßen Motor. Zu den wesentlichen Komponenten dieses Motors gehören eine Motorträgerplatte 10 mit einem Lagergehäuse 20 und einer ringförmigen Statoranordnung 30, sowie eine demgegenüber drehbar angeordnete Rotorträgerplatte 40 mit einem Zapfen 44, einem Montageflansch 46 und einem Permanentmagnet-Rotor 50. Sowohl die Motorträgerplatte 10 wie die Rotorträgerplatte 40 hat im wesentlichen die Gestalt einer kreisrunden Scheibe und besteht aus "Dehonit" (Epoxydharz-verpreßtes Holz). Am Umfang der Motorträgerplatte 10 ist eine Stufe 13 ausgespart, in welche ein Fuß 31 der Statoranordnung 30 eingesetzt und befestigt ist. Zur Befestigung und azimutalen Ausrichtung dienen einerseits ein Spannring 14 und andererseits in regelmäßigen Abständen angeordnete Schraubbolzen 12. Benachbart zur umlaufenden Stufe sind in der Motorträgerplatte 10 in regelmäßigen Abständen durchgehende Bohrungen 15 ausgespart, über welche Kühlluft in den Innenraum des Motors eintreten kann. Weiterhin ist die Motorträgerplatte 10 in regelmäßigen Abständen mit Gewindebohrungen 16 zur Befestigung des Motors an einem nicht dargestellten Träger versehen. Weiterhin ist in die Motorträgerplatte 10 ein nach innen vorstehender Ring eingesetzt, der mit einem abgekröpften Flansch 17 versehen ist, der nahe an die Rotorträgerplatte 40 heranreicht, und die Sekundärwicklung 18 eines Resolvers trägt. Gegenüber an der Rotorträgerplatte 40 ist die Primärwicklung 48 des Resolvers angebracht. Im Zentrum der Motorträgerplatte 10 ist ein zylindrisches Lagergehäuse 20 angeordnet und befestigt. Am Innenumfang des Lagergehäuses 20 sind im axialen Abstand zueinander zwei Motorlager 22 und 23 angeordnet. Mit Hilfe dieser Motorlager 22, 23 wird ein Zapfen 44 drehbar gehalten, der starr mit einem Montageflansch 46 und der Rotorträgerplatte 40 verbunden ist. Der Zapfen 44 und damit der Montageflansch 46 und die Rotorträgerplatte 40 mit dem Permanentmagnet-Rotor 50 rotieren um die Rotationsachse 45. Mit Hilfe von Anpreß- und Mitnehmer-Federringen ist der Zapfen 44 in üblicher Weise gegen axiale Verstellung gesichert. Am Montageflansch 46 kann eine - nicht dargestellte - Abtriebswelle angeschlossen werden. Bei Bedarf kann zusätzlich eine Schalldämmhaube 11 vorgesehen werden, die sich am Umfang der Motorträgerplatte 10 abstützt, und die eine mittige Offnung aufweist, welche den Montageflansch 46 frei läßt.

Am Außenumfang der Rotorträgerplatte 40 ist ein vertikal abstehender, glockenförmiger Permanentmagnet-Rotor 50 angebracht, der im wesentlichen besteht aus einem inneren Ring 52 aus magnetisch leitendem Material (Eisen, St 54) und einem äußeren Ring 58 aus magnetisch leitendem Material (Eisen, St 54) und einzelnen, stückigen Permanentmagneten aus Sm/Co-Magnetmaterial. An der Außenumfangsfläche des inneren Ringes 52 sind die inneren Permanentmagnete 54 angeklebt und an der Innenumfangsfläche des äußeren Ringes 58 sind die äußeren Permanentmagnete 56 angeklebt. Die Lücken zwischen benachbarten Permanentmagneten 54 bzw. 56 sind vorzugsweise mit ausgehärtetem Kunstharz azsgefüllt, um eine nutenfreie Oberfläche zu schaffen. Zwischen den inneren Permanentmagneten 54 und den äußeren Permanentmagneten 56 befindet sich der magnetisch aktive Luftspalt 55, in welchen die Statorwicklung 32 zusammen mit der Krone 33 im Sinne einer Tauchspule hineinragt. Im inneren Ring 52 sind, benachbart zur Rotorträgerplatte 40, in regelmäßigen Abständen radial ausgerichtete Bohrungen 53 ausgespart, durch welche Kühlluft aus dem Innenraum des Motors in den Luftspalt 55 strömen kann und auf diesem Wege die in der Statorwicklung 32 erzeugte Wärme abführt. Am Außenumfang der inneren Permanentmagnete 54 liegt eine dünne Bandage 59 (ca. 0,5 mm stark) aus hochfesten Fasern an, mit welcher der Zugbeanspruchung auf die inneren Magnete 54 durch die Fliehkraft bei hohen Drehzahlen entgegengewirkt wird.

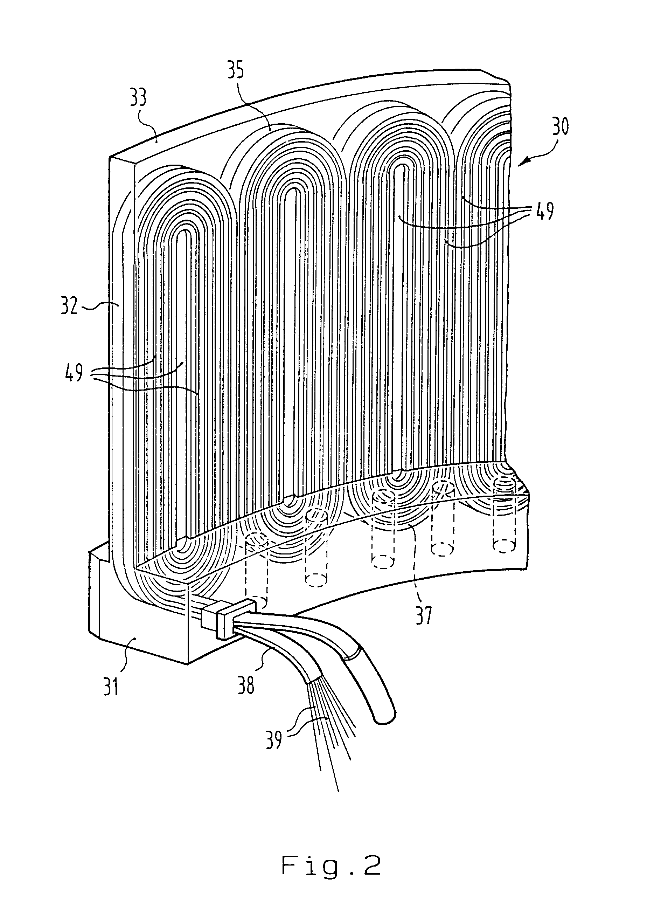

Die Fig. 2 zeigt in perspektivischer Darstellung einen Ausschnitt aus einer erfindungsgemäß vorgesehenen Statoranordnung 30. Ersichtlich besteht diese Statoranordnung 30 aus einer Statorwicklung 32, einem Fuß 31 und einer Krone 33. Die oberen Wickelköpfe 35 sind teilweise in die Krone 33 eingebettet. Die unteren Wickelköpfe 37 sind teilweise in den Fuß 31 eingebettet. Darüberhinaus bestehen Krone 33 und Fuß 31 aus ausgehärtetem, mit Glasfasern verstärktem Kunstharz. Die Statorwicklung 32 bestent - neben dem ausgehärteten Strukturharz aus der in bestimmter Form gewickelten Litze 38, die ihrerseits aus einer Vielzahl einzeln isolierter Filamente 39 aufgebaut ist. In der Innenumfangsfläche und in der Außenumfangsfläche der Statorwicklung 32 sind axial ausgerichtete Nuten 49 eingeprägt, welche die Oberfläche erhöhen, den Wärmeübergang an der Grenzfläche steigern und damit die Wirkung einer Luftkühlung erhöhen.

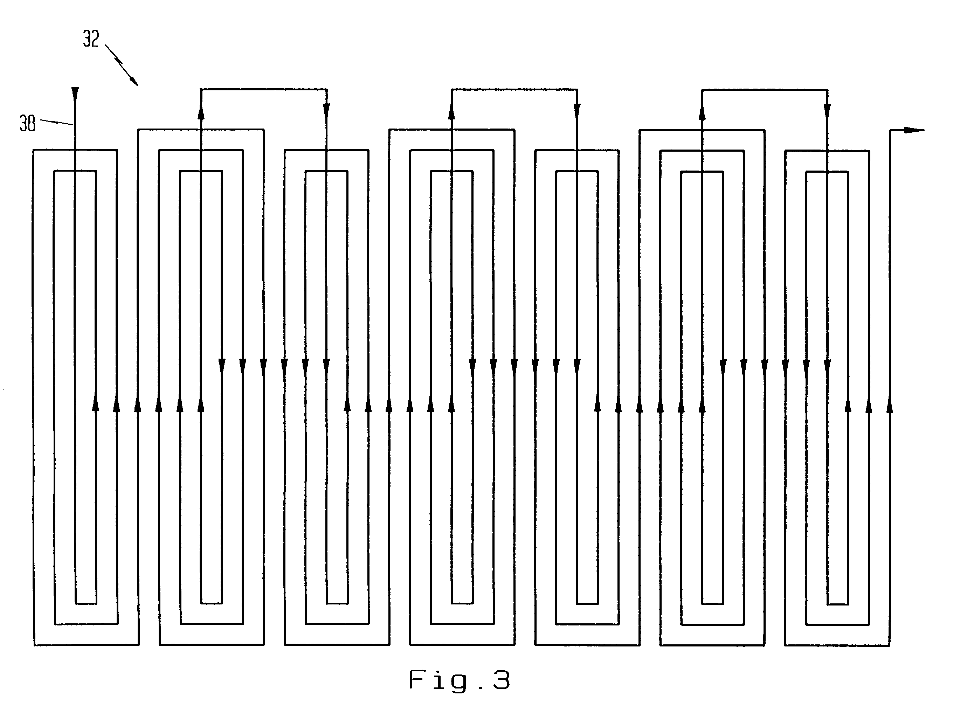

Die Fig. 3 zeigt in schematischer Darstellung ein Wickelschema zur Ausführung einer Statorwicklung 32 aus einer Litze 38. Alternativ sind auch andere Wicklungsformen möglich, beispielsweise eine streng mäanderförmige Wicklung oder solche Wicklungen, bei denen ein elektrischer Pol aus drei oder vier benachbarten Wicklungsabschnitten besteht.

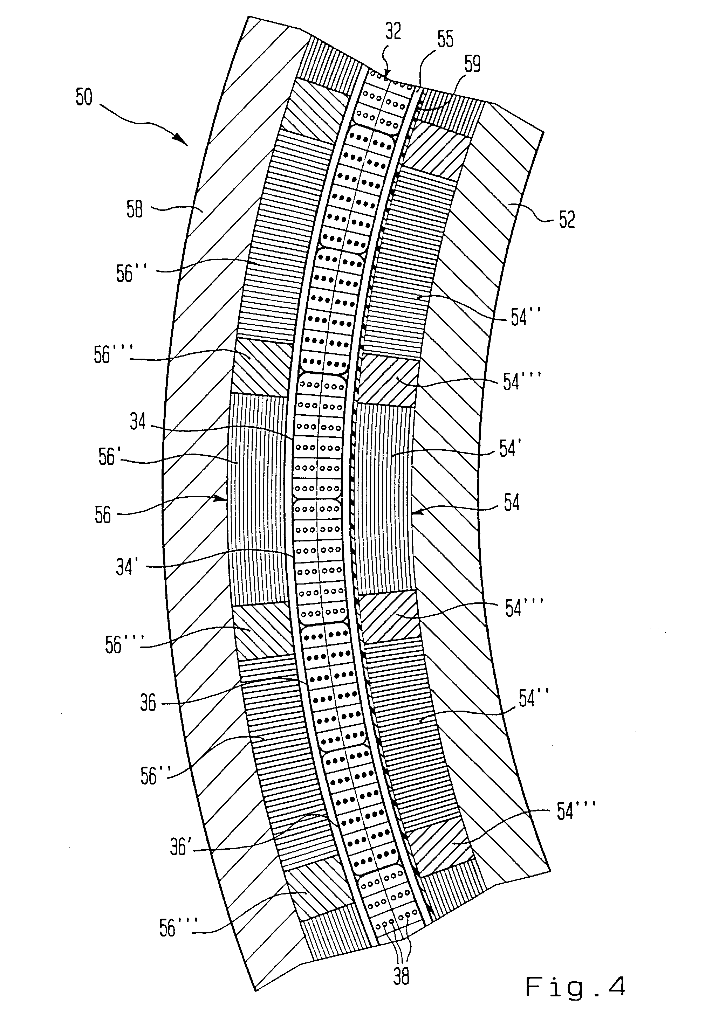

Mit Bezugnahme auf Fig. 4 werden der Permanentmagnet-Rotor 50 und die Verhältnisse im Luftspalt 55 näher erläutert. Der innere Ring 52 und der äußere Ring 58 bestehen jeweils aus magnetischem Rückschlußmaterial, beispielsweise aus St 54. Die Permanentmagnete 54, 56 bilden flache (Dicke etwa 5 - 10 mm), im wesentlichen quaderförmige Körper, deren Hauptflächen an den Umfang des Luftspaltes 55 angepaßt sind. Diese Permanentmagnete 54, 56 sind vertikal zu ihren Hauptflächen aufmagnetisiert. Am Außenumfang des Innenringes 52 werden abwechselnd magnetische Nord-Pole 54' und magnetische Süd-Pole 54" angeordnet. Entgegengesetzte Pole 54' und 54" sind durch neutrale Zonen 54"' voneinander getrennt. In gleicher Weise sind am Innenumfang des äußeren Ringes 58 abwechselnd magnetische Nord-Pole 56' und Süd-Pole 56" angeordnet, zwischen denen wiederum neutrale Zonen 56"' bestehen. Es wird eine solche Ausbildung und Anordnung der Permanentmagnete gewählt, daß die neutralen Zonen 52"' und 56"' radial fluchtend angeordnet sind. Radial übereinanderliegende Pole weisen die gleiche Polarität auf. Sofern für die Breite (Abmessung in Umfassungsrichtung) der neutralen Zonen 54"", 56''' im wesentlichen die lichte Weite (radiale Abmessung) des Luftspaltes 55 gewählt wird, resultiert mit dieser Anordnung im Luftspalt 55 ein weitgehend homogenes Magnetfeld mit geradlinigem, radialem Feldlinienverlauf und ständig wechselnder Polarität. Die Polteilung der Permanentmagnete 54, 56 wird durch deren Polbreite und die Breite der neutralen Zonen 54"', 56"' (Abmessungen in Umfangsrichtung) bestimmt und ist im vorliegenden Falle konstant und einphasig.

Wie weiterhin aus Fig. 4 ersichtlich, befindet sich im magnetisch aktiven Luftspalt 55 die als kompakte, dichte, verpreßte Flachspule ausgebildete Statorwicklung 32 der Statoranordnung 30. Diese Statorwicklung 32 besteht aus in Umfangsrichtung aneinandergrenzenden geraden Wicklungsabschnitten 34, 34' und 36, 36'. Mit den Punkten ist schematisch angedeutet, daß die Wicklungsabschnitte 34, 34' in axialer Richtung hinführen, und entsprechend ist mit den Kreisen angedeutet, daß die Wicklungsabschnitte 36, 36' in axialer Richtung herführen (vgl. auch das Wicklungsschema nach Fig. 3). Sämtliche Wicklungsabschnitte 34, 34', 36, 36' weisen eine gleiche Stegbreite auf, die im wesentlichen der halben Polbreite der Permanentmagnetpole 54, 46 entspricht. In je zwei paarweise benachbarten Wicklungsabschnitten 34 und 34' oder 36 und 36' fließt zu einem gegebenen Zeitpunkt der Strom in der gleichen Richtung, und die paarweisen Wicklungsabschnitte 34 und 34' bilden einen elektrischen Pol, und die benachbarten paarweisen Wicklungsabschnitte 36 und 36' bilden einen entgegengesetzten elektrischen Pol. Ferner weisen diese paarweisen Wicklungsabschnitte 34, 34' und 36, 36' eine Polteilung auf, die mit der Polteilung der Permanentmagnete 54, 56 übereinstimmt. Jeder Wicklungsabschnitt 34, 34', 36, 36' besteht seinerseits aus einer Anzahl Litzen 38. Jede Litze 38 weist einen rechteckigen Querschnitt auf und besteht ihrerseits aus einer Vielzahl einzeln isolierter Filamente 39. Entsprechend der gegebenen Darstellung besteht jeder Wicklungsabschnitt 34, 34', 36, 36' aus je zwölf Litzenabschnitten 38, die in zwei Lagen zu je sechs Litzenabschnitten angeordnet sind. Jeder Litzenabschnitt 38 ist mit der längeren Seite des Litzenquerschnittes parallel zur Richtung der magnetischen Feldlinien im Luftspalt 55 angeordnet.

Im wesentlichen entsprechend der vorstehend mit Bezugnahme auf die Zeichnungen erläuterten Ausführungsform wurde ein erfindungsgemäßer Gleichstrommotor gebaut. Verteilt auf den inneren Ring 52 und den äußeren Ring 58 weist der Motor 60 Pole auf (Polgröße 50 x 25 x 7 mm), die aus Sm/Co-Magnetmaterial bestehen. Die Polteilung am Umfang beträgt 28,3 mm; die Magnetbelegung etwa 88 %. Die Statorwicklung ist eine kompakte, dichte Flachspule, die aus einer feindrähtigen Cu-Litze aufgebaut ist, die mit Strukturharz (ein hoch kriechfähiges und temperaturbeständiges Epoxidharz, "Duralco 4460", bezogen von Cotronics) gefüllt und stabilisiert ist. Die Cu-Litze hat einen Querschnitt von etwa 3,9 mm² und weist in diesem Querschnitt etwa 115 um die Litzen-Längsachse verdrillte Filamente auf, die einzeln isoliert sind (Isoliermaterial: Polyimid, Klasse H). Die ausgehärtete Statorwicklung hat eine Dicke von etwa 6 mm und weist unter Berücksichtigung des Phasenversatzes am Umfang 27 elektrische Pole auf, mit einer Polteilung von 28,3 mm. Die Wicklungsabschnitte (34, 34', 36, 36') haben eine freie Länge von 63 mm und eine aktive Länge von 50 mm.

Zur Stromversorgung dieses Motors dient ein angepaßter Wechselstrom-Gleichrichter. Am Motor und zum Betrieb wurden nachstehende Parameter bestimmt:

| | |
|---|---|
| Remanenzinduktion | 1,0 T |
| max. Luftspaltinduktion | 0,64 T |

in der Statorwicklung pro Phase induzierte Spannung

| | |
|---|---|
| U_{ind} | 0,034 V_{eff} / (U/min) |
| U_{ind} | 0,048 Vₛₚ / (U/min) |
| U_{ind: (3200 U/min)} | 109 V_{eff} |

Motor bei 3200 U/min

| | |
|---|---|
| Spannung | 3 x 220 V_{eff} |
| Dauerstrom | 110 A_{eff} |
| Spitzenstrom (5 min) | 124 A_{eff} |
| Dauerleistung | 21 kW |
| Spitzenleistung (5 min) | 27 kW |

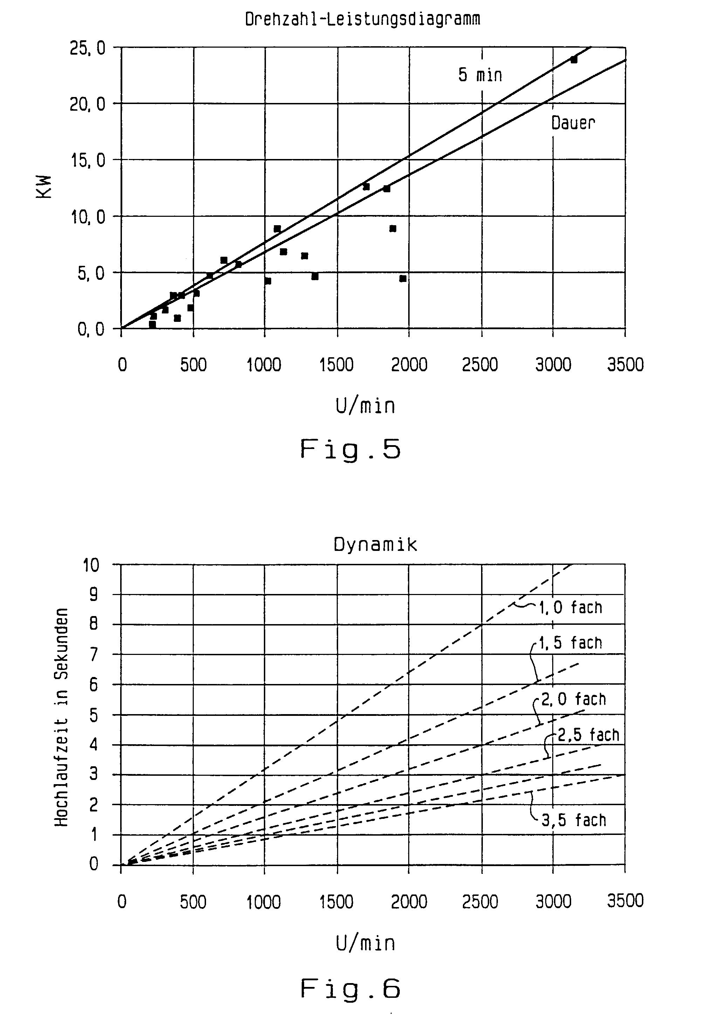

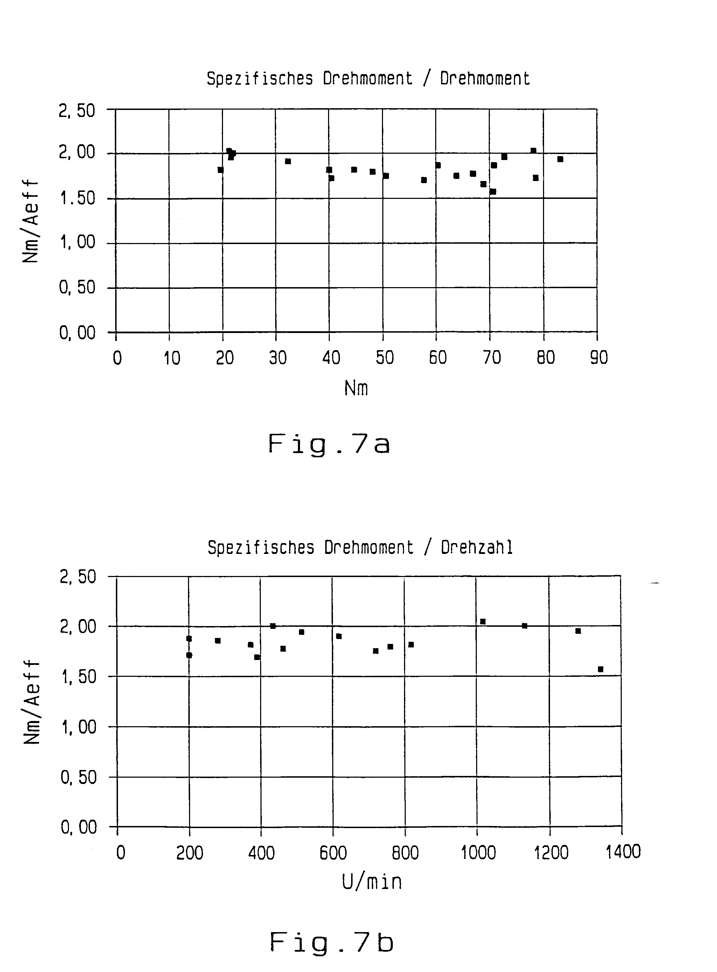

An diesem Gleichstrommotor wurden nachstehende Eigenschaften bestimmt:
a) Die Leistung des Motors in Abhängigkeit von der Drehzahl.
   Die Ergebnisse sind mit Fig. 5 dargestellt. Die eingetragenen Punkte sind Meßwerte. Die Grenzlinien von 5 min und für Dauerbetrieb sind für 150° Wicklungstemperatur angegeben. Das Strukturharz und die Filamentisolation lassen eine Dauertemperatur von 180° zu.
b) Die Hochlaufzeiten des Motors in freidrehendem Zustand
   Die Ergebnisse sind mit Fig. 6 dargestellt. Ersichtlich weist der Motor ein hochdynamisches Verhalten auf, das insbesondere für Roboterantriebe, für Hauptantriebe bei Bearbeitungsmaschinen und bei Fahrzeugantrieben als dynamische Reaktion auf Funktionen wie ABS und ASR besonders wertvoll ist. Die hohe Dynamik im Vergleich zu Standardantrieben kommt daher, daß die Krafterzeugung praktisch am Außenmantel des Motors erfolgt, und die Dauermagnete die notwendige Erregung sehr viel gewichtsgünstiger liefern als vergleichbare elektrische Komponenten. Durch die eisenlose Konstruktion des Stators wird eine extreme Uberlastbarkeit des Motors gegeben, die praktisch nur durch die Thermik und nicht durch die Dimensionierung der Magnetkreise bestimmt ist, während normale Maschinen in Sättigung gehen.
c) Das spezifische Drehmoment
   in Abhängigkeit vom Drehmoment (vgl. Fig. 7a) und
   in Abhängigkeit von der Drehzahl (vgl. Fig. 7b)

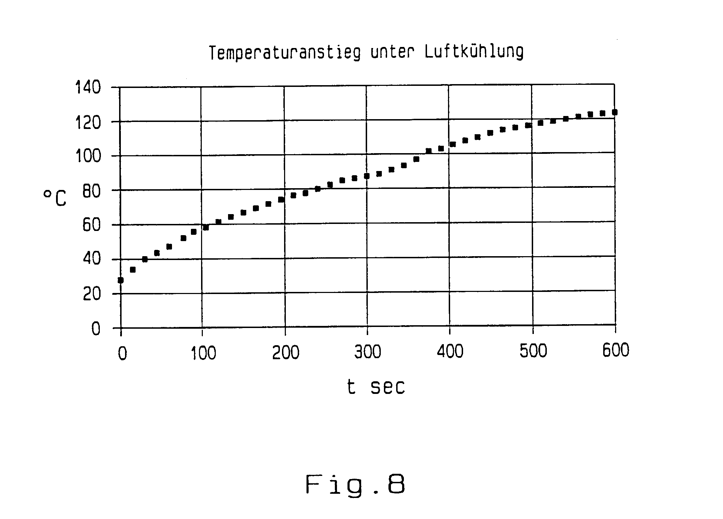

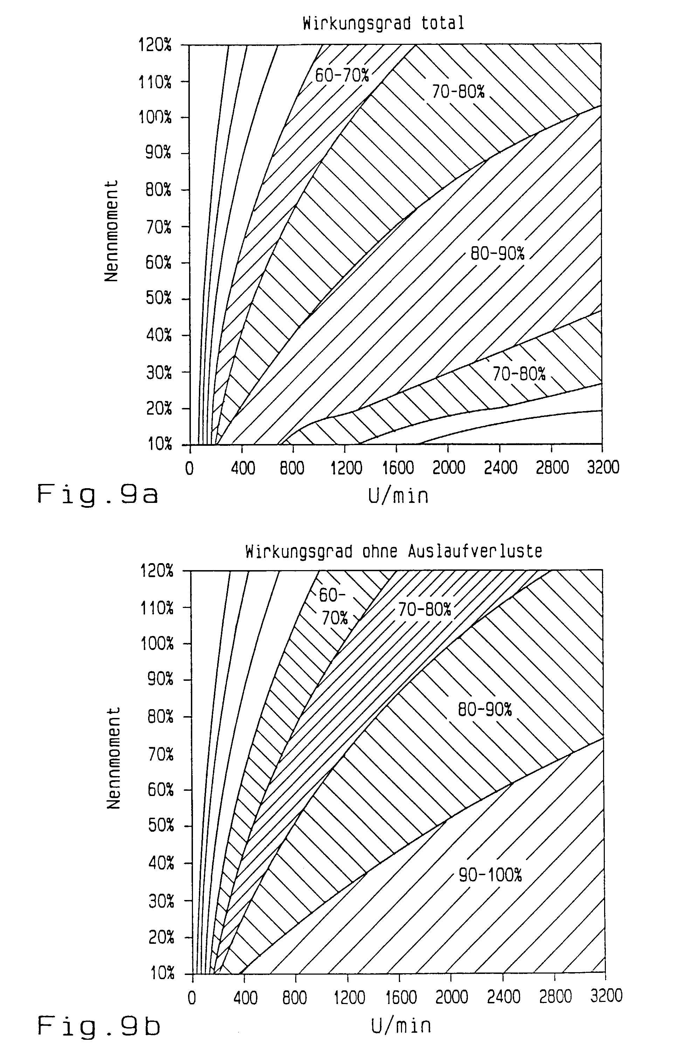

   Die beiden Diagramme zur Drehzahlabhängigkeit bzw. zur Drehmomentabhängigkeit des spezifischen Drehmomentes zeigen, daß sich der Motor weitgehend stromlinear verhält. Das bedeutet, daß weder drehzahl- bzw. -drehmoment-abhängig außergewöhnliche Verluste (z.B. Wirbelstrom- und Sättigungsverluste) auftreten. Die Überlastfähigkeit des Motors ist lediglich thermisch bestimmt.
d) Das thermische Verhalten bei Kühlung mit Luft und bei NennstromBelastung (I= 120 A)
   Die Ergebnisse sind mit Fig. 8 dargestellt.
   Bei dieser Form der Statorwicklung (kompakte, dichte, dünne Flachwicklung aus einer feindrähtigen Cu-Litze) die mit ausgehärtetem Strukturharz gefüllt und geschützt ist und zur Verbesserung der Kühleigenschaften an der Oberfläche der Wicklung mit Rillen versehen ist, zeigt sich, daß die Kühlung zum größten Teil durch den Wärmeübergang vom Spulenkörper an Luft gegeben ist. Bei einer Luftgeschwindigkeit von ca. 7 m/sec entfällt ca. 90 % des Temperaturgefälles auf den Wärmeübergang an der Oberfläche und nur 10 % auf die Wärmeleitung im Inneren des Spulenträgers. Trotz der hohen Stromdichte in der Statorwicklung von etwa 10 A/mm² ist eine Motorkühlung mit Luft völlig ausreichend und ist gegen kurzzeitige Überlastungen unempfindlich, weil der Motor ohne Kühlung eine thermische Zeitkonstante von 4 Minuten aufweist.
e) Der Wirkungsgrad des Motors
   Die Ergebnisse sind dargestellt als totaler Wirkungsgrad (vgl. Fig. 9a) und Wirkungsgrad ohne Auslaufverluste (vgl. Fig. 9b).
   Die Darstellung ist in Form eines Höhenliniendiagrammes gegeben. Dabei wird der Wirkungsgrad als Markierung in Abhängigkeit von Drehmoment (vertikal) und Drehzahl (horizontal) dargestellt. Die Grenzkurven zwischen den Markierungen sind Kurven konstanten Wirkungsgrades. In Fig. 9a ist der gemessene (totale) Wirkungsgrad dargestellt. Er beinhaltet alle Verluste, wie Ohmsche Verluste, Verluste in den Magneten, Luftreibung, Lagerreibung und gegebenenfalls Verluste durch Isolationsprobleme in der Litzenleitung. Das Diagramm nach Fig. 9b zeigt die Eigenschaften der elektromagnetischen Wirkung des Motors, bereinigt um die konstruktive Ausführung.

Gegenüber einem aus dem Stand der Technik (DE 40 41 805 C1 oder DE 41 30 016 Al) bekannten Gleichstrommotor, der einen im wesentlichen gleichartigen Permanentmagnet-Rotor aufweist, dessen Statorwicklung jedoch als Massivdrahtwicklung ausgeführt ist, konnten mit der erfindungsgemäßen Ausgestaltung der Statorwicklung die Auslaufverluste um wenigstens 80 % verringert werden. Erst die vorliegende Erfindung macht dieses Motorkonzept als Antriebsmotor für Fahrzeuge geeignet. Dabei erscheint mit den vorgelegten Daten das Entwicklungspotential dieses Motors keineswegs ausgeschöpft. Durch Erhöhung der aktiven Länge der Permanentmagnete und der Wicklungsabschnitte auf ca. 100 mm (bei gleichem Rotorumfang) erscheint es möglich, die Motorleistung zu verdoppeln und die relativen Verluste im Motor um 25 % zu senken. Weiterhin erscheinen Drehzahlen von etwa 6000 bis 7500 U/min für die vorliegende Größe nicht unrealistisch. Es erscheint daher nicht unrealistisch, mit diesem Motorkonzept bei einem Rotordurchmesser von etwa 250 bis 300 mm und einer axialen Bauhöhe von etwa 150 mm Leistungen von 100 kW und mehr zu erzielen.

## Patentansprüche

1. Elektronisch kommutierte Gleichstrommaschine,
insbesondere elektronisch kommutierter Gleichstrommotor,
mit
- einer Rotationsachse (45),
- einem Permanentmagnet-Rotor (50), mit einer geraden Anzahl Permanentmagnetpole (54, 56),
-- die in einer konstanten Polteilung angeordnet sind,
-- die längs eines zylindrischen Luftspaltes (55) rotieren, und
-- die im Luftspalt (55) ein homogenes Magnetfeld mit geradlinigem, radialem Feldlinienverlauf und ständig wechselnder Polarität erzeugen,
- einer eisenlosen Statoranordnung (30) mit einer selbsttragenden Statorwicklung (32), die aus Leitermaterial und ausgehärtetem Kunstharz besteht, und die gerade Wicklungsabschnitte (34, 34'; 36, 36') aufweist, die parallel zur Rotationsachse (45) ausgerichtet sind, und die sich innerhalb des Luftspaltes (55) erstrecken, wobei in jedem Wicklungsabschnitt (34, 34'; 36, 36') pro gegebenem Zeitpunkt nur eine Stromrichtung auftritt, und wobei jeder Wicklungsabschnitt (34, 34'; 36, 36') eine Stegbreite aufweist, die mit der Polteilung der Permanentmagnetpole (54, 56) am Rotor (50) korrespondiert,
dadurch gekennzeichnet, daß
das Leitermaterial jedes Wicklungsabschnittes (34, 34'; 36, 36') besteht aus einer oder mehreren Litze(n) (38), wobei jede Litze (38) eine Vielzahl dünner Filamente (39) aufweist, die einzeln isoliert sind, innerhalb der Litze (38) verdrillt angeordnet sind und einen Durchmesser kleiner/gleich 0,4 mm aufweisen; und
dieses Leitermaterial zusammen mit flüssigem Kunstharz verpreßt worden ist, um eine Statorwicklung (32) mit einem Leitermaterialanteil von 70 bis 90 Vol.-% zu erhalten.

2. Gleichstrommaschine nach Anspruch 1,
dadurch gekennzeichnet, daß
die Litze (38) pro 1 mm² Querschnittsfläche etwa 10 bis 50 Filamente (39) aufweist.

3. Gleichstrommaschine nach Anspruch 1 oder 2,
dadurch gekennzeichnet, daß
die Statorwicklung (32) als kompakte, dichte Flachwicklung ausgeführt ist, entweder in Form eines einstückigen, geschlossenen Ringes oder in Form mehrerer Segmente, die sich zu einem geschlossenen Ring oder zu einem Ringsegment ergänzen; und
dieser Ring bzw. dieses Ringsegment zumindest mit den geraden Wicklungsabschnitten (34, 34'; 36, 36') axial in den Luftspalt (55) einführbar ist.

4. Gleichstrommaschine nach einem der Ansprüche 1 bis 3,
dadurch gekennzeichnet, daß
die Statorwicklung (32) als einseitig eingespannte Tauchspule ausgebildet ist, die in einen Luftspalt (55) hineinragt, der auf einer Seite von rotierbar angeordneten Permanentmagnetpolen (54, 56) begrenzt ist, und der auf der anderen Seite von Permanentmagnetmaterial und/oder magnetischem Rückschlußmaterial begrenzt ist.

5. Gleichstrommaschine nach Anspruch 4,
dadurch gekennzeichnet, daß
der Luftspalt (55) an seiner Innenumfangsfläche von feststehend angeordnetem Eisenmaterial begrenzt ist, in dem nur geringe Wirbelströme induzierbar sind.

6. Gleichstrommaschine nach einem der Ansprüche 1 bis 4,
dadurch gekennzeichnet, daß
der Permanentmagnet-Rotor (50) als offene Glockenkonstruktion ausgebildet ist, wobei an einem Glockenboden ein innerer Ring (52) und im Abstand dazu ein äußerer Ring (58), je aus magnetisch leitendem Rückschlußmaterial angebracht ist;
der innere Ring (52) an seinem Außenumfang mit Permanentmagnetmaterial (54) belegt ist;
der äußere Ring (58) an seinem Innenumfang mit Permanentmagnetmaterial (56) belegt ist;
jeweils die Permanentmagnetpole (54, 56) am inneren und äußeren Ring (52, 58) übereinanderliegend angeordnet sind;
übereinanderliegende Permanentmagnetpole (54, 56) in radialer Richtung und gleichsinnig polarisiert sind;
sowohl an dem inneren wie an dem äußeren Ring (52, 58) benachbarte Pole (54 bzw. 56) alternierend polarisiert sind; und
zwischen den Polen am inneren und äußeren Ring (52, 58) der magnetisch aktive Luftspalt (55) ausgebildet ist.

7. Gleichstrommaschine nach Anspruch 6,
dadurch gekennzeichnet, daß
der innere und der äußere Ring (52, 58) je eine axiale Länge aufweisen; und
diese axiale Länge etwa 50 bis 100 mm beträgt.

8. Gleichstrommaschine nach Anspruch 6,
dadurch gekennzeichnet, daß
in den Permanentmagnetpolen (54, 56) eine oder mehrere dünne, axial ausgerichtete Nut(en) ausgespart ist/sind, um jeden Pol aus mehreren Stäben aus Permanentmagnetmaterial aufzubauen, wobei in diesen Stäben aufgrund des verminderten Querschnittes die Induzierung von Wirbelströmen herabgesetzt ist.

9. Gleichstrommaschine nach einem der Ansprüche 6 bis 8,
dadurch gekennzeichnet, daß
die Permanentmagnetpole (54) am inneren Ring (52) mit einer dünnen Bandage (59) aus hochfesten Fasern belegt und so gegen Zugbeanspruchungen durch Fliehkräfte gesichert sind.

10. Gleichstrommaschine nach einem der Ansprüche 1 bis 9,
dadurch gekennzeichnet, daß
die Statorwicklung (32) als kompakte, dichte Flachwicklung ausgeführt ist, entweder in Form eines einstückigen, geschlossenen Ringes oder in Form eines oder mehrerer Ringsegmente(s);
der geschlossene Ring oder die Ringsegmente je eine Außenumfangsfläche und je eine Innenumfangsfläche aufweisen; und
in die Außenumfangsfläche und/oder in die Innenumfangsfläche axial ausgerichtete Nuten (49) eingeprägt sind.

11. Gleichstrommaschine nach einem der Ansprüche 1 bis 10,
dadurch gekennzeichnet, daß
eine Kühlung mit Hilfe zwangsweise geführter Kühlluft vorgesehen ist, die in den Luftspalt (55) eingeführt wird und die längs der Umfangsflächen der Statorwicklung (32) strömt.

12. Gleichstrommaschine nach einem der Ansprüche 1 bis 11,
dadurch gekennzeichnet, daß
die den Luftspalt (55) begrenzende(n) Umfangsfläche(n) am Rotor (50) nutenfrei ausgebildet ist/sind.

13. Gleichstrommaschine nach einem der Ansprüche 1 bis 12,
dadurch gekennzeichnet, daß
die Statorwicklung (32) eine Dicke (Abmessung in radialer Richtung) von etwa 5 bis 10 mm aufweist.

14. Gleichstrommaschine nach einem der Ansprüche 1 bis 13,
dadurch gekennzeichnet, daß
jeder Wicklungsabschnitt (34, 34'; 36, 36') mehrere Litzenabschnitte aufweist, die aus einer oder mehreren Litze(n) (38) bestehen; diese Litze (38) einen rechteckigen Querschnitt aufweist; und diese Litze (38) mit der längeren Seite des Litzenquerschnittes parallel zum Verlauf der Feldlinien im Luftspalt (55) angeordnet ist.

15. Gleichstrommaschine nach einem der Ansprüche 1 bis 14,
dadurch gekennzeichnet, daß
die Wicklungsabschnitte (34, 34'; 36, 36') eine Stegbreite (Abmessung in Umfangsrichtung) aufweisen, die im wesentlichen der halben Polbreite der Permanentmagnetpole (54, 56) entspricht; und je zwei paarweise benachbarte Wicklungsabschnitte (34 und 34' oder 36 und 36') in gleicher Richtung vom Strom durchflossen werden und so einen elektrischen Pol bilden.

16. Gleichstrommaschine nach einem der Ansprüche 1 bis 15,
dadurch gekennzeichnet, daß
die Wicklungsabschnitte (34, 34'; 36, 36') mit einer bestimmten Länge in den Luftspalt (55) hineinragen; und diese Länge etwa 50 bis 100 mm beträgt.

17. Gleichstrommaschine nach einem der Ansprüche 1 bis 16,
wobei aufeinanderfolgende Wicklungsabschnitte (34, 34'; 36, 36') über einen oberen Wickelkopf (35) und/oder über einen unteren Wickelkopf (37) miteinander verbunden sind,
dadurch gekennzeichnet, daß
sich zumindest die oberen Wickelköpfe (35) in Richtung und Dicke innerhalb einer gedachten Verlängerung der Wicklungsabschnitte (34, 34'; 36, 36') erstrecken, so daß die fertig zusammengebaute Statorwicklung (32) axial in einen zylindrischen Luftspalt (55) an einem gegebenen Permanentmagnet-Rotor (50) eingesetzt werden kann.

18. Gleichstrommaschine nach Anspruch 17,
dadurch gekennzeichnet, daß
die oberen Wickelköpfe (35) in eine einstückig angeformte Krone (33) eingebettet sind, die aus faserverstärktem Kunstharz besteht.

19. Gleichstrommaschine nach Anspruch 18,
dadurch gekennzeichnet, daß
in diese Krone (33) eine Bandage aus hochfesten Fasern eingelegt ist.

20. Gleichstrommaschine nach einem der Ansprüche 17 bis 19,
dadurch gekennzeichnet, daß
die unteren Wickelköpfe (37) in einen einstückig angeformten Fuß (31) aus faserverstärktem Kunstharz eingebettet sind; und
die Statoranordnung (30) mit Hilfe dieses Fußes (31) an einer Motorträgerplatte (10) befestigt und zentriert ist.

21. Gleichstrommaschine nach einem der Ansprüche 1 bis 20,
dadurch gekennzeichnet, daß
eine Anzahl Wicklungsabschnitte (34, 34'; 36, 36') zu einem ersten Wicklungssegment zusammengefaßt sind, das eine konstante Polteilung aufweist und das elektrisch eine Phase bildet; und
wenigstens ein weiteres, zweites Wicklungssegment dieser Art vorhanden ist, das am gleichen Umfang elektrisch phasenversetzt gegenüber dem ersten Wicklungssegment angeordnet ist.

22. Gleichstrommaschine nach Anspruch 21,
dadurch gekennzeichnet, daß
die Statoranordnung (30) aus drei im wesentlichen 120° umfassenden Wicklungssegmenten aufgebaut ist; und
zwei Wicklungssegmente am Umfang derartig angeordnet sind, daß sie gegen das dritte Wicklungssegment um +/- 2/3 der Polteilung der Permanentmagnetpole (54, 56) gegen diese Polteilung versetzt angeordnet sind.

23. Gleichstrommaschine nach Anspruch 21 oder 22,
wobei zum motorischen Betrieb eine Speisung über Wechselrichter erfolgt,
dadurch gekennzeichnet, daß für jede einzelne Phase eine Speisung durch je einen Wechselrichter vorgesehen ist.

24. Gleichstrommaschine nach einem der Ansprüche 1 bis 23,
wobei zum motorischen Betrieb eine Speisung über einen oder mehrere Wechselrichter erfolgt,
dadurch gekennzeichnet, daß
eine Speisung mit einem sinusförmigen Strom vorgesehen ist, dessen Kurvenform an die Spannung angepaßt ist, die von den rotierenden Permanentmagneten (54, 56) in der Statorwicklung (32) induziert wird.

25. Gleichstrommaschine nach einem der Ansprüche 1 bis 24,
wobei eine Einrichtung zur Pollageerfassung der Permanentmagnetpole (54, 56) am Rotor (50) vorhanden ist, und angepaßt an die so ermittelte Pollage die Ströme in der Statorwicklung (32) gesteuert werden,
dadurch gekennzeichnet, daß
als Einrichtung zur Pollageerfassung ein Resolver (18; 48) dient, dessen Primärwicklung (48) synchron mit dem Permanentmagnet-Rotor (50) rotiert.

## Claims

1. An electronically commutated DC machine,
especially an electronically commutated DC motor,
comprising:
- a rotational axis (45),
- a permanent magnet rotor (50),
having an even number of permanent magnet poles (54, 56), arranged in a constant pole pitch
for rotating along a cylindrical air gap (55) and
generating within said air gap (55) a homogeneous magnetic field with linear and radially extending magnetic field lines with a continuously changing polarity,
- an iron-free stator means (30) including a self-supporting stator coil (32) consisting of conductor material and cured synthetic resin and comprising straight coil portions (34, 34'; 36, 36') arranged parallel to the rotational axis (45) and extending within the air gap (55) wherein each coil portion (34, 34'; 36, 36') comprises only one distinctive current direction at a given time moment, and wherein each coil portion (34, 34'; 36, 36') has a width corresponding to the pole pitch of the permanent magnet rotor (50),
characterized in that
the conductor material of each coil portion (34, 34'; 36, 36') is consisting of one or more several strand(s) (38), wherein each strand (38) comprises a number of thin filaments (39) individually isolated, and arranged twisted within the strand (38) and having a diameter equal or less than 0.4 mm; and
wherein said conductor material and liquid resin being compacted to provide a stator coil (32) having a content of conductor material of from 70 to 90 % by volume.

2. The DC machine according to claim 1,
characterized in that
the strand (38) comprises substantially 10 to 50 filaments (39) per 1 mm² cross-sectional area.

3. The DC machine according to claim 1 or 2,
characterized in that
the stator coil (32) comprises a compact, dense flat coil either forming a one-piece closed ring or forming several segments yielding a closed ring or a ring segment,
wherein at least the straight coil portions (34, 34'; 36, 36') of said ring or ring segment are introduced axially into said air gap (55).

4. The DC machine according to anyone of the claims 1 to 3,
characterized in that
the stator coil (32) is formed and arranged as a plunger coil clamped at one coil end and extending into the air gap (55), wherein said air gap (55) is defined at one side by rotatably arranged permanent poles (54, 56), and defined at the other opposite side by permanent magnet material and/or by magnetically conductive material for closing a magnetic flux circle.

5. The DC machine according to claim 4,
characterized in that
the air gap (55) comprises an inner circumferential face, and the material defining said inner circumferential face comprises a stationary iron material selected from an iron material which minimizes eddy currents.

6. The DC machine according to anyone of the claims 1 to 4,
characterized in that
the permanent magnet rotor (50) is in the shape of an open bell type armature comprising a plate and an inner ring (52) and an outer ring (58) extending from said plate and concentric to the inner ring (52);
the inner ring (52) and the outer ring (58) being made of a magnetically conductive material for closing a magnetic flux circle;
the inner ring (52) comprises permanent magnet material forming permanent magnet poles (54) at an outer circumferential face thereof;
the outer ring (58) comprises permanent magnet material forming permanent magnet poles (56) at an inner circumferential face thereof;
the permanent magnet poles (54) on the inner ring (52) and the permanent magnet poles (56) on the outer ring (58) being arranged in alignment and being polarized radially with the same polarity;
adjacent permanent magnet poles (54) on the inner ring (52) and
adjacent permanent magnet poles (56) on the outer ring (58) being alternatively polarized; and
the magnetically active air gap (55) is formed between said permanent magnet poles on the inner ring (52) and on the outer ring (58).

7. The DC machine according to claim 6,
characterized in that
the inner ring (52) and the outer ring (58) have an axially extending length in a range of 50 to 100 mm.

8. The DC machine according to claim 6,
characterized in that
each permanent magnet pole (54, 56) comprises one or more thin, axially extending slots such that each pole is divided into a number of bars for reducing eddy currents.

9. The DC machine according to anyone of the claims 6 to 8,
characterized in that
the permanent magnet poles (54) on the inner ring (52) are secured with a thin band (59) made of ultra strength fibers such as to provide a protection against tensile forces due to centrifugal force generated at high rotational speed.

10. The DC machine according to anyone of the claims 1 to 9,
characterized in that
the stator coil (32) comprises a dense flat coil forming a one-piece ring or one or several ring segment(s);
the ring or the ring segment(s) each having an outer circumferential face and an inner circumferential face; and
at least one of said circumferential faces having axially extending embossed grooves (49).

11. The DC machine according to anyone of the claims 1 to 10,
characterized in that
including means for proceeding a forced flow of cooling air into the air gap (55) along the circumferential faces of the stator coil (32).

12. The DC machine according to anyone of the claims 1 to 11,
characterized in that
the permanent magnet rotor (50) comprises one or more circumferential face(s) defining the air gap (55); and
said face(s) being free of slots, grooves and recesses.

13. The DC machine according to anyone of the claims 1 to 12,
characterized in that
the stator coil (32) comprises a radially extending thickness in the range of 5 to 10 mm.

14. The DC machine according to anyone of the claims 1 to 13,
characterized in that
the stator coil (32) comprises several coil portions (34, 34'; 36, 36'), comprising several strand portions;
wherein each strand portion comprises one or more strand(s) (38) having a rectangular cross-section; and
the strand (38) is arranged within the air gap (55) in such a manner that the longer side of the strand cross-sectional area is arranged parallel to the magnetic field lines within the air gap (55).

15. The DC machine according to anyone of the claims 1 to 14,
characterized in that
the coil portions (34, 34'; 36, 36') comprise a traverse width essentially equal to the half pole width of the permanent magnet poles (54, 56); and
electrical current flows through two adjacent coil portions (34 and 34' or 36 and 36') in the same direction such that said two adjacent coil portions form one electric pole.

16. The DC machine according to anyone of the claims 1 to 15,
characterized in that
the coil portions (34, 34'; 36, 36') extend into the air gap (55) with an axially extending length in the range of 50 to 100 mm.

17. The DC machine according to anyone of the claims 1 to 16,
wherein the coil portions (34, 34'; 36, 36') are connected with each other in tandem via an upper winding head (35) or via a lower winding head (37);
characterized in that at least the upper winding heads (35) extend in direction and thickness within an imaginary extension of the coil portions (34, 34'; 36, 36') such that the completely assembled stator coil (32) may be introduced axially into the cylindrical air gap (55) of a given permanent magnet rotor (50).

18. The DC machine according to claim 17,
characterized in that
the upper winding heads (35) are embedded within a crown portion (33) made of fiber enforced resin.

19. The DC machine according to claim 18,
characterized in that
the crown portion (33) includes a band made of ultra strength fibers.

20. The DC machine according to anyone of the claims 17 to 19,
characterized in that
the lower winding heads (37) are embedded within a foot portion (31) made of fiber enforced resin; and
the stator means (30) are attached to and are centered with a motor supporting plate (10) by means of said foot portion (31).

21. The DC machine according to anyone of the claims 1 to 20,
characterized in that
a number of coil portions (34, 34'; 36, 36') form a first coil segment and a second coil segment, each segment comprising a constant pole pitch and forming a distinctive electric phase displaced with respect to each other.

22. The DC machine according to claim 21,
characterized in that
the stator means comprises a first, a second and a third coil segment, each having a circumferential extension of about 120°;
the second coil segment and the third coil segment being phase displaced in opposite directions 2/3 of the pole pitch with respect to said first coil segment.

23. The DC machine according to claim 21 or claim 22,
operated in a motor mode by means of electric current supplied by inverter means
characterized in that
each an inverter means is provided for each single electric phase of the stator means (30).

24. The DC machine according to anyone of the claims 1 to 23,
operated in a motor mode by means of electric current supplied by one or more inverter means,
characterized in that
the electric current comprises a sinus-like shape which is matched to the voltage being induced within the stator coil (32) by the rotating permanent magnets (54, 56).

25. The DC machine according to anyone of the claims 1 to 24,
comprising a means for detecting the pole position of the permanent magnet poles (54, 56) of the rotor (50), and providing signals for controlling the current supply of the stator coil (32);
characterized in that
said detecting means comprises a resolver (18; 48) having a primary winding (48) which rotates synchronously with the permanent magnet rotor (50).

## Revendications

1. Machine à courant continu commutée électroniquement,
notamment à moteur à courant commuté électroniquement,
comprenant
- un axe (45) de rotation,
- un rotor (50) à aimant permanent,
ayant un nombre pair de pôles (54, 56) à aimant permanent,
- - qui sont disposés suivant un pas polaire constant,
- - qui tournent le long d'un entrefer (55) cylindrique, et
- - qui produisent dans l'entrefer (55) un champ magnétique homogène à lignes de champ radiales rectilignes et à polarité alternant en permanence,
- un dispositif (30) statorique, sans fer et ayant un enroulement (32) statorique autoportant, constitué d'une matière conductrice et d'une résine synthétique durcie et qui comporte des tronçons (34, 34'; 36, 36') d'enroulements rectilignes dirigés parallèlement à l'axe (45) de rotation et qui s'étendent dans l'entrefer (55), seulement un sens de courant apparaissant dans chaque tronçon (34, 34'; 36, 36') d'enroulement pour chaque instant donné et chaque tronçon (34, 34'; 36, 36') d'enroulement ayant une largeur de nervure qui correspond au pas polaire des pôles (54, 56) à aimant permanent sur le rotor (50),
caractérisée en ce que
le matériau conducteur de chaque tronçon (34, 34' ; 36, 36') d'enroulement est constitué d'un cordon (38) ou de plusieurs cordons (38), chaque cordon (38) ayant un grand nombre de filaments (39) minces qui sont isolés individuellement, qui sont torsadés dans le cordon (38) et qui ont un diamètre inférieur ou égale à 0,4 mm;
et ce matériau conducteur a été comprimé avec de la résine synthétique liquide pour obtenir un enroulement (32) statorique ayant une proportion de matériau conducteur de 70 à 90 % en volume.

2. Machine à courant continu suivant la revendication 1,
caractérisé en ce que
le cordon (38) a de 10 à 50 filaments environ par 1 mm² de surface de section transversale.

3. Machine à courant continu suivant la revendication 1 ou 2,
caractérisé en ce que
l'enroulement (32) statorique est constitué sous la forme d'un enroulement plat, compact et étanche, soit sous la forme d'un anneau fermé d'une seule pièce ou sous la forme de plusieurs segments qui sont complétés en un anneau fermé ou en un segment annulaire fermé ; et cet anneau ou ce segment annulaire peut être introduit axialement dans l'entrefer (55) au moins par les tronçons (34, 34'; 36, 36') d'enroulement rectilignes.

4. Machine à courant continu suivant l'une des revendications 1 à 3,
caractérisé en ce que
l'enroulement (32) statorique est sous la forme d'une bobine mobile qui est encastrée d'un côté et qui fait saillie dans un entrefer (55) délimité d'un côté par des pôles (54, 56) à aimant permanent montés de manière à pouvoir tourner et de l'autre côté par du matériau d'aimant permanent et/ou du matériau magnétique de retour.

5. Machine à courant continu suivant la revendication 5,
caractérisé en ce que
l'entrefer (55) est délimité sur sa surface périphérique intérieure par de la matière ferreuse qui est montée fixe et dans laquelle ne peuvent être induits que de faibles courants de Foucault.

6. Machine à courant suivant l'une des revendications 1 à 4,
caractérisé en ce que
le rotor (50) à aimant permanent est sous la forme d'une cloche ouverte, un anneau (52) intérieur étant disposé au fond de la cloche et, à distance de celui-ci, un anneau (58) extérieur, chacun d'entre eux étant en un matériau magnétiquement conducteur de retour ;
l'anneau (52) intérieur est muni sur son pourtour extérieur de matériau (54) d'aimant permanent ;
l'anneau (58) extérieur est muni sur son pourtour intérieur de matériau (56) d'aimant permanent ;
les pôles (54, 56) à aimant permanent sur les anneaux intérieur (52) et extérieur (58) sont superposés .
des pôles (54, 58) à aimant permanent superposés sont polarisés en direction radiale et dans le même sens ;
des pôles (54 ou 56) voisins, tant sur l'anneau intérieur (52) que sur l'anneau extérieur (58), sont polarisés de manière alternée ; et
l'entrefer (55) magnétiquement actif est formé entre les pôles sur l'anneau intérieur (52) et sur l'anneau extérieur (58).

7. Machine à courant continu suivant la revendication 6,
caractérisé en ce que
l'anneau intérieur (52) et l'anneau extérieur (58) ont chacun une longueur axiale ; et
cette longueur axiale est comprise entre 50 et 100 mm environ.

8. Machine à courant continu suivant la revendication 6,
caractérisé en ce que
il est ménagé dans les pôles (54, 56) à aimant permanent une ou plusieurs gorges minces dirigées axialement pour former chaque pôle de plusieurs bâtonnets de matériau d'aimant permanent, l'induction de courant de Foucault étant diminuée dans ces bâtonnets en raison de la moindre section transversale.

9. Machine à courant continu suivant l'une des revendications 6 à 8,
caractérisé en ce que
les pôles (54) à aimant permanent sur l'anneau intérieur (52) sont munis d'un mince bandage (59) en fibre très résistante et sont ainsi à l'épreuve de contraintes de traction due à des forces centrifuges.

10. Machine à courant continu suivant l'une des revendications 1 à 9,
caractérisé en ce que
l'enroulement (32) statorique est constitué en enroulement plat, compact et étanche, soit sous la forme d'un anneau fermé d'une pièce, soit sous la forme d'un segment annulaire ou de plusieurs segments annulaires ;
l'anneau fermé ou les segments annulaires ont respectivement une surface périphérique extérieure et une surface périphérique intérieure ; et
dans la surface périphérique extérieure et/ou dans la surface périphérique intérieure sont ménagées des gorges (49) dirigées axialement.

11. Machine à courant continu suivant l'une des revendications 1 à 10,
caractérisé en ce que
il est prévu un refroidissement à l'aide d'air de refroidissement à passage forcé qui est envoyé dans l'entrefer (55) et qui passe le long des surfaces périphériques de l'enroulement (32) statorique.

12. Machine à courant continu suivant l'une des revendications 1 à 11,
caractérisé en ce que
la ou les surface(s) périphérique(s) délimitant l'entrefer (55) sont constituées sur le rotor (50) sans gorge.

13. Machine à courant continu suivant l'une des revendications 1 à 12,
caractérisé en ce que
l'enroulement (32) statorique a une épaisseur (dimension dans la direction radiale) de 5 à 10 mm environ.

14. Machine à courant continu suivant l'une des revendications 1 à 13,
caractérisé en ce que
chaque tronçon (34, 34'; 36, 36') d'enroulement comporte plusieurs tronçons de cordon qui sont constitués d'un cordon (38) ou de plusieurs cordons (38); ce cordon (38) a une section transversale rectangulaire ; et ce cordon (38) est disposé en ayant les grands côtés de la section transversale parallèle aux lignes de champ dans l'entrefer (55).

15. Machine à courant continu suivant l'une des revendications 1 à 14,
caractérisé en ce que
les tronçons (34, 34' ; 36, 36') d'enroulement ont une largeur de nervure (dimension suivant la direction périphérique) qui correspond sensiblement à la demi largeur des pôles (54, 56) à aimant permanent ; et
respectivement deux tronçons (34, 34'; 36, 36') d'enroulement, voisins par paire, sont parcourus par le courant dans le même sens et forment ainsi un pôle électrique.

16. Machine à courant continu suivant l'une des revendications 1 à 15,
caractérisé en ce que
les tronçons (34, 34'; 36, 36') d'enroulement pénètrent dans l'entrefer (55) sur une certaine longueur ; et
cette longueur est comprise entre 50 et 100 mm environ.

17. Machine à courant continu suivant l'une des revendications 1 à 16,
des tronçons (34, 34'; 36, 36') d'enroulement successifs étant reliés entre eux par une tête (35) supérieure d'enroulement et/ou par une tête (37) inférieure d'enroulement,
caractérisé en ce que
au moins les têtes (35) supérieures d'enroulement s'étendent en direction et en épaisseur dans un prolongement imaginaire des tronçons (34, 34' ; 36, 36') d'enroulement de sorte que l'enroulement (32) statorique fini d'assemblage peut être introduit axialement dans un entrefer (55) cylindrique d'un rotor (50) à aimant permanent donné.

18. Machine à courant continu suivant la revendication 17,
caractérisé en ce que
les têtes (35) supérieures d'enroulement sont incorporées à une couronne (33) d'une seule pièce, qui est en résine synthétique renforcée par de la fibre.

19. Machine à courant continu suivant la revendication 18,
caractérisé en ce que
il est inséré dans cette couronne (33) un bandage en fibre très résistante.

20. Machine à courant continu suivant l'une des revendications 17 à 19,
caractérisé en ce que
les têtes (37) d'enroulement sont incorporées à un pied (31) d'une seule pièce en résine synthétique renforcée par de la fibre ; et
le dispositif (30) statorique est fixé et centré à l'aide de ce pied (31) sur une plaque (10) de support de moteur.

21. Machine à courant continu suivant l'une des revendications 1 à 20,
caractérisé en ce que
un certain nombre de tronçons (34, 34'; 36, 36') d'enroulement sont réunis en un premier segment d'enroulement qui a un pas polaire constant et qui forme électriquement une phase ; et
au moins un autre second segment d'enroulement de ce genre est présent et est disposé de manière à être déphasé électriquement sur le même pourtour par rapport au premier segment d'enroulement.

22. Machine à courant continu suivant la revendication 21,
caractérisé en ce que
le dispositif (30) statorique est constitué de trois segments d'enroulement s'étendant sur sensiblement 120° ; et
deux segments d'enroulement sont disposés à la périphérie de sorte qu'ils sont décalés par rapport au troisième segment d'enroulement de +/- 2/3 du pas polaire des pôles (54, 56) à aimant permanent.

23. Machine à courant continu suivant la revendication 21 ou 22,
dans laquelle, en vue de l'entraînement moteur, il s'effectue une alimentation par l'intermédiaire d'un onduleur,
caractérisé en ce que
pour chaque phase individuelle, il est prévu une alimentation par respectivement un onduleur.

24. Machine à courant continu suivant l'une des revendications 1 à 23,
dans laquelle, pour l'entraînement moteur, il est prévu une alimentation par un onduleur ou par plusieurs onduleurs,
caractérisé en ce que
il est prévu une alimentation par un courant sinusoïdal dont la forme de la courbe est adaptée à la tension qui est induite dans l'enroulement (32) statorique par les aimants (54, 56) permanents tournants.

25. Machine à courant continu suivant l'une des revendications 1 à 24,
dans laquelle un dispositif de détection de la position des pôles (54, 56) à aimant permanent est prévu sur le rotor (50) et les courants dans l'enroulement statorique sont commandés en fonction de la position des pôles ainsi déterminée,
caractérisé en ce que
comme dispositif de détection de la position des pôles, on se sert d'un résolveur (18, 48) dont l'enroulement (48) primaire tourne en synchronisme avec le rotor (50) à aimant permanent.
